# EUROPEAN PATENT APPLICATION

(11) **EP 4 567 735 A1**
(43) Date of publication of application: **11.06.2025**
(21) Application number: 23884786.7
(22) Date of filing: 27.10.2023
(51) Int. Cl.: G06T 11/00

(54) **IMAGE PROCESSING METHOD AND ELECTRONIC DEVICE**

(30) Priority: 02.11.2022 CN 202211361772
(71) Applicant: Huawei Technologies Co., Ltd., Shenzhen, Guangdong 518129 (CN)
(72) Inventor: GENG, Yong, Shenzhen, Guangdong 518129 (CN); ZENG, Junjie, Shenzhen, Guangdong 518129 (CN); HUANG, Jianhui, Shenzhen, Guangdong 518129 (CN); ZHANG, Hua, Shenzhen, Guangdong 518129 (CN); QIAN, Kang, Shenzhen, Guangdong 518129 (CN)
(74) Representative: MERH-IP Matias Erny Reichl Hoffmann Patentanwälte PartG mbB
(86) International application number: PCT/CN2023/127393
(87) International publication number: WO 2024/093854

(57) **Abstract**

This application discloses an image processing method and an electronic device, and relates to the field of electronic technologies. The electronic device may reconstruct a highlight motion picture that is of a moving subject in one frame of image and that appears in a time period near shooting time of the image. Therefore, even if no highlight picture is captured in the image shot by a user, the electronic device can generate a highlight picture based on the image currently shot by the user. **In** this solution, the electronic device may obtain the frame of shot image and first event data in a preset time period near the shooting time of the image. The electronic device may generate a motion track of the target subject in the frame of image in the preset time period based on the frame of image and the first event data. Then, the electronic device may determine a highlight track in the motion track, and obtain, from the first event data, second event data corresponding to the highlight track. **In** this way, the electronic device can generate, based on the frame of image and the second event data, the highlight image corresponding to the highlight track.

## Description

This application claims priority to Chinese Patent Application No. 202211361772.9, filed with the China National Intellectual Property Administration on November 2, 2022 and entitled "IMAGE PROCESSING METHOD AND ELECTRONIC DEVICE", which is incorporated herein by reference in its entirety.

### TECHNICAL FIELD

This application relates to the field of electronic technologies, and in particular, to an image processing method and an electronic device.

### BACKGROUND

Currently, an image shooting function has become a mandatory function of an electronic device. User requirements and user experience for image shooting are also increasing. In some application scenarios, a user expects to capture a memorable highlight picture during image shooting. However, some highlight pictures are fleeting. When the user presses a shutter after finding the highlight picture, the highlight picture usually disappears. As a result, it is difficult for the user to capture a desired highlight picture, and user experience is poor.

### SUMMARY

This application provides an image processing method and an electronic device, to reconstruct, by using a single frame of image and event data in a time period near shooting time of the image, a highlight motion picture that is of a moving subject in the image and that appears in the time period near the shooting time of the image. Therefore, even if no highlight picture is captured in the image shot by a user, the electronic device can generate a highlight picture based on the image currently shot by the user. This improves user experience.

To achieve the foregoing objective, this application uses the following technical solutions.

According to a first aspect, this application provides an image processing method. The method may be applied to an electronic device. The image processing method includes: obtaining one frame of shot image and first event data in a preset time period near shooting time of the frame of image; generating a motion track of a target subject in the frame of image in the preset time period based on the frame of image and the first event data; determining a highlight track in the motion track; obtaining, from the first event data, second event data corresponding to the highlight track; and generating, based on the frame of image and the second event data, a highlight image corresponding to the highlight track.

According to the solution provided in the first aspect, the electronic device may obtain the frame of image and the first event data in the time period near the shooting time of the frame of image. The frame of image may be shot by a standard camera. The first event data may be captured by an event camera. In addition, the event data captured by the event camera may reflect motion information in a scene. Then, the electronic device may generate, based on the obtained frame of image and the first event data in the time period near the shooting time of the image, the motion track of the target subject in the image in the time period near the shooting time of the image. The target subject may be a moving subject in the image. When there are a large quantity of moving subjects in the image, the target subject may alternatively be a moving subject that a user is most interested in and wants to photograph most in the image, namely, a significant subject. Then, the electronic device may determine, from the motion track of the target subject, a motion track that the user is interested in, namely, the highlight track, and select, from the first event data, the second event data related to the highlight track. In this way, the electronic device can reconstruct, based on the frame of image and the second event data related to the highlight track, the highlight picture of the target subject when the target subject is in the motion track that the user is interested in.

In other words, in the foregoing solution, the electronic device may record a motion process of the target subject in the scene in the time period near the shooting time of the image by using the frame of image and the event data in the time period, and does not need to record the motion process of the target subject in the scene in the time period by continuously shooting a group of images in the time period by using the standard camera. In addition, when the standard camera performs continuous shooting, power consumption and memory consumption of the electronic device are high. However, in this solution, the event data used to record the motion information in the scene occupies small memory space and consumes a small amount of power. Therefore, the electronic device may record the complete motion process at minimum memory costs and minimum power consumption. Then, the electronic device may generate, by using the frame of image and the event data in the time period near the shooting time of the image, the motion track of the target subject in the image in the time period near the shooting time of the image, to generate the highlight picture based on the highlight track that is in the motion track and that the user may be interested in, and recommend the highlight picture to the user. Therefore, the electronic device may not only implement generation of a highlight picture with low power consumption and low storage space occupation, but also generate, based on the image currently shot by the user, a highlight picture desired by the user when the user does not shoot a desired highlight image. This improves user experience.

For example, when the user wants to shoot a fixed-point highlight image of a person jumping to a highest point in the air, even if a scene in which the person is at the highest point in the air is not captured in one frame of image currently shot by the user, for example, a scene in which the person falls from the air is captured, the electronic device may reconstruct, based on the frame of image currently shot by the user and event data that is in a time period near shooting time of the image and that is captured by the event camera, a motion track of the person in a time period from a moment when the person jumps to the highest point in the air to a moment when the person falls from the air. Then, the electronic device may determine, from the motion track, that a highlight track that the user is interested in is a highest track point. In this way, the electronic device can reconstruct, based on the frame of image currently shot by the user and the event data of the highest track point, the fixed-point highlight image that is of the person at the highest point in the air and that is desired by the user.

In a possible implementation, a camera mode of a camera application on the electronic device may include a highlight image mode. When the electronic device is in the highlight image mode, the electronic device may obtain, in response to a shooting operation of the user, one frame of image shot by the standard camera and first event data that is in a preset time period near shooting time of the frame of image and that is captured by the event camera. In this way, the electronic device can help the user obtain, when shooting the frame of image, the highlight motion picture that is of the moving subject in the image and that appears in the time period near the shooting time of the image.

In a possible implementation, a gallery application on the electronic device may store a dynamic image shot in a dynamic image mode. In the dynamic image mode, the frame of image shot by the standard camera and the first event data that is in the preset time period near the shooting time of the image and that is captured by the event camera are recorded. Based on this, the electronic device may obtain, based on the dynamic image, the frame of image shot by the standard camera and the first event data that is in the preset time period near the shooting time of the frame of image and that is captured by the event camera. In this way, the electronic device can add a post-processing mode for the dynamic image to the gallery, to extend a highlight image generation function for the dynamic image. Therefore, the user may not only view the shot dynamic image by using the gallery application, but also view the highlight motion picture that appears in the motion process of the moving subject in the dynamic image.

In a possible implementation, the camera mode of the camera application on the electronic device may include the dynamic image mode. When the electronic device is in the dynamic image mode, the electronic device may obtain, in response to a shooting operation of the user, one frame of image shot by the standard camera and first event data that is in a preset time period near shooting time of the frame of image and that is captured by the event camera. Therefore, the electronic device can generate the dynamic image based on the frame of image and the first event data. Optionally, the electronic device may store the generated dynamic image in the gallery application.

In a possible implementation, after the electronic device obtains the frame of image shot by the standard camera and the first event data that is in the preset time period near the shooting time of the frame of image and that is captured by the event camera, the image processing method provided in this application may further include: obtaining, from the first event data, event data corresponding to each of a plurality of time intervals, where the plurality of time intervals are obtained by dividing the preset time period; generating, based on the frame of image and the event data corresponding to each time interval, an image corresponding to each time interval, to obtain a plurality of frames of images; and generating a dynamic image sequence based on the plurality of frames of images, where the dynamic image sequence is used to present a motion process of the target subject in the frame of image in the preset time period.

In other words, the electronic device may reconstruct, by using the frame of image shot by the standard camera and the event data in the time period near the shooting time of the image, a scene image at any moment in the time period. Therefore, the electronic device may generate a dynamic image by using the reconstructed scene image, thereby recording a dynamic process in a scene in a time period near the shooting time of the frame of image shot by the user. In this way, the electronic device can generate the dynamic image in the time period near the shooting time of the image by using the frame of image and the event data in the time period, and does not need to continuously shoot a group of images in the time period by using the standard camera to generate the dynamic image. In addition, when the standard camera performs continuous shooting, power consumption and memory consumption of the electronic device are high. However, because the event data occupies extremely small memory space and consumes extremely low power, the electronic device may record the complete motion process at minimum memory costs and minimum power consumption. Therefore, the electronic device can implement generation of the dynamic image with low power consumption and low storage space occupation.

In a possible implementation, the image processing method provided in this application may further include: generating a cover image of the dynamic image sequence based on the highlight image. In this way, after the electronic device generates the highlight image based on the frame of image recorded in the dynamic image and the first event data in the preset time period near the shooting time of the image, the electronic device can use the highlight image as the cover image in the dynamic image. Therefore, when viewing the dynamic image, the user may quickly browse the highlight picture in the dynamic image.

In a possible implementation, after the electronic device obtains the frame of image shot by the standard camera and the first event data that is in the preset time period near the shooting time of the frame of image and that is captured by the event camera, the image processing method provided in this application may further include: obtaining, from the first event data, event data related to the target subject as valid first event data for subsequent dynamic image generation or highlight image generation. In this way, the electronic device can record only motion information of the target subject in the scene, to implement segmentation processing on moving objects in the scene.

In a possible implementation, the determining a highlight track in the motion track may include: determining the highlight track in the motion track based on a highlight track point in the motion track. In this way, the electronic device can determine, by using some track points in the motion track, the motion track that the user is interested in.

In a possible implementation, the image processing method provided in this application may further include: identifying a specified track point in the motion track, where the specified track point includes at least one of a highest track point, a lowest track point, an intermediate track point, a start track point, an end track point, and a track mutation point; and determining the highlight track point in the motion track based on the specified track point. In this way, the electronic device can automatically identify some special track points in the motion track, to determine the motion track that the user is interested in.

In a possible implementation, the determining the highlight track point in the motion track based on the specified track point may include: displaying the specified track point; and in response to a selection operation for a first track point in the specified track point, obtaining the first track point as the highlight track point in the motion track. In this way, after automatically identifying some special track points in the motion track, the electronic device can display these special track points to the user on a display, and the user selects a track point of interest from the special track points. Therefore, it is ensured that the highlight image finally generated by the electronic device can meet a user requirement. This improves user experience.

In a possible implementation, the image processing method provided in this application may further include: displaying the motion track; and in response to a selection operation for a second track point in the motion track, obtaining the second track point as the highlight track point in the motion track. In this way, the electronic can present, to the user on the display, the motion track of the target subject in the frame of image in the time period near the shooting time of the image, and the user randomly selects a track point of interest. Therefore, it is ensured that the highlight image finally generated by the electronic device can meet a user requirement. This improves user experience.

In a possible implementation, the determining the highlight track in the motion track based on a highlight track point in the motion track may include: obtaining a track segment corresponding to the highlight track point as the highlight track in the motion track; or obtaining the highlight track point as the highlight track in the motion track. In this way, the highlight picture obtained when the target subject is at the highlight track point and a highlight motion process of the target subject existing before and after the highlight track point can be displayed in the highlight image generated by the electronic device.

In a possible implementation, the electronic device may alternatively generate the highlight image based on a highlight moment that is in motion time of the target subject and that the user may be interested in, and recommend the highlight image to the user. The image processing method provided in this application may further include: generating a motion timeline of the target subject in the preset time period based on the motion track; determining highlight time in the motion timeline; obtaining, from the first event data, third event data corresponding to the highlight time; and generating, based on the frame of image and the third event data, a highlight image corresponding to the highlight time.

In other words, the electronic device may determine, by using the motion track of the target subject, the motion time of the target subject in the frame of image in the time period near the shooting time of the image. Then, the electronic device may determine, from the motion time of the target subject, motion time that the user is interested in, namely, the highlight time, and select, from the first event data, the third event data related to the highlight time. In this way, the electronic device can reconstruct, based on the frame of image and the third event data related to the highlight time, the highlight picture of the target subject at the highlight time that the user is interested in.

In a possible implementation, the determining highlight time in the motion timeline may include: determining the highlight time in the motion track based on a highlight moment in the motion timeline. In this way, the electronic device can determine, by using some moments in the motion time of the target subject, the highlight moment that the user is interested in.

In a possible implementation, the image processing method provided in this application may further include: identifying a specified moment in the motion timeline, where the specified moment includes at least one of a start moment, an intermediate moment, an end moment, and a moment corresponding to the highlight track point in the motion track; and determining the highlight moment in the motion timeline based on the specified moment. In this way, the electronic device can automatically identify some special moments in the motion time of the target subject, to determine the highlight moment that the user is interested in.

In a possible implementation, the determining the highlight moment in the motion timeline based on the specified moment may include: displaying the specified moment; and in response to a selection operation for a first moment in the specified moment, obtaining the first moment as the highlight moment in the motion timeline. In this way, after automatically identifying some special moments in the motion time of the target subject, the electronic device can display these special moments to the user on the display, and the user selects a moment of interest from the special moments. Therefore, it is ensured that the highlight image finally generated by the electronic device can meet a user requirement. This improves user experience.

In a possible implementation, the image processing method provided in this application may further include: displaying the motion timeline; and in response to a selection operation for a second moment in the motion timeline, obtaining the second moment as the highlight moment in the motion timeline. In this way, the electronic can present, to the user on the display, the motion timeline of the target subject in the frame of image in the time period near the shooting time of the image, and the user randomly selects a moment of interest. Therefore, it is ensured that the highlight image finally generated by the electronic device can meet a user requirement. This improves user experience.

In a possible implementation, the determining the highlight time in the motion track based on a highlight moment in the motion timeline may include: obtaining a time period corresponding to the highlight moment as the highlight time in the motion track; or obtaining the highlight moment as the highlight time in the motion track. In this way, the highlight moment of the target subject and the highlight motion process of the target subject existing before and after the highlight moment can be displayed in the highlight image generated by the electronic device.

In a possible implementation, the image processing method provided in this application may further include: determining a highlight time range in the preset time period based on density of the first event data; obtaining, from the first event data, fourth event data corresponding to the highlight time range; and generating, based on the frame of image and the fourth event data, a highlight image corresponding to the highlight time range.

It may be understood that, when a motion amplitude of the target subject in the scene is large, the event data captured by the event camera is usually dense. For example, the event data is usually dense at an instant moment when a motion changes greatly, for example, a picture of fireworks blooming in the air, a picture of lightning bursting in the air, and a picture of a launch object (for example, a bullet in a gun) flying out of a launch apparatus. When the motion amplitude of the target subject in the scene is small, the event data captured by the event camera is usually sparse. In addition, an image that the user is generally interested in and wants to shoot is usually an image with a large motion amplitude or a small motion amplitude of a target subject in a scene. Therefore, in this solution, the electronic device determines, by using the density of the first event data, the highlight time range that the user is interested in, and selects, from the first event data, the fourth event data that is generated in the highlight time range. In this way, the electronic device can reconstruct, based on the frame of image and the fourth event data in the highlight time range, the highlight picture of the target subject in the highlight time range that the user is interested in.

In a possible implementation, the determining a highlight time range in the preset time period based on density of the first event data may include: determining, based on the density of the first event data, a specified time range that meets a preset density condition as the highlight time range in the preset time period, where the preset density condition includes at least one of the following: The density is maximum density in the preset time period, the density is lower than first density, the density is higher than second density, and the density is higher than the first density and lower than the second density. In this way, the electronic device can determine, by identifying some time ranges in which the first event data is dense or sparse, a time range that the user is interested in.

In a possible implementation, the image processing method provided in this application may further include: displaying the specified time range; and in response to a selection operation for a target time range in the specified time range, obtaining the target time range as the highlight time range in the preset time period. In this way, after automatically identifying some time ranges in which the first event data is dense or sparse, the electronic device can display these special time ranges to the user on the display, and the user selects a time range of interest from the special time ranges. Therefore, it is ensured that the highlight image finally generated by the electronic device can meet a user requirement. This improves user experience.

In a possible implementation, the determining a highlight time range in the preset time period based on density of the first event data may include: displaying a density distribution diagram of the first event data based on the density of the first event data; and in response to a selection operation for target density distribution in the density distribution diagram, obtaining a time range corresponding to the target density distribution as the highlight time range in the preset time period. In this way, the electronic device can present density distribution of the first event data to the user on the display, and the user selects a density distribution region of interest, so that the electronic device can determine, based on the density distribution region of interest, the time range that the user is interested in. Therefore, it is ensured that the highlight image finally generated by the electronic device can meet a user requirement. This improves user experience.

In a possible implementation, the image processing method provided in this application may further include: determining a frame rate of the highlight image based on density of the fourth event data. In this way, the electronic device can adaptively adjust a frame rate of the highlight image based on the density of the event data. For example, at an instant moment when a speed is very high, for example, at a moment of bullet shooting or lightning, event data captured by the electronic device by using the event camera is very dense. In this case, the electronic device may increase a quantity of frames of highlight images to be generated, so that a frame rate of the highlight image can reach 960 fps. In this way, the user can view more delicate and clearer highlight pictures.

In a possible implementation, the image processing method provided in this application may further include: deblurring the frame of image based on event data within exposure time of the frame of image.

It may be understood that, if the exposure time of the standard camera is long, when the electronic device photographs a moving object by using the standard camera, one frame of image shot is likely to be blurred. If the electronic device generates a dynamic image or a highlight image by using the blurred frame of image, an effect of obtaining the dynamic image or the highlight image is usually poor. In this way, in this solution, the electronic device can first accurately perform, by using the event data within the exposure time of the frame of image, motion compensation on one frame of image that is blurred due to a high-speed motion of a photographed target, so that the electronic device can obtain one frame of image that is deblurred. The electronic device can generate a high-quality dynamic image or highlight image by using the deblurred frame of image and the event data in the time period near the shooting time of the image. In this way, visual effects of the dynamic image and the highlight image are improved, and blurring is reduced.

According to a second aspect, this application provides an electronic device, including a data obtaining unit, a track generation unit, a track determining unit, a first screening unit, and a first processing unit. The data obtaining unit is configured to obtain one frame of shot image and first event data in a preset time period near shooting time of the frame of image. The track generation unit is configured to generate a motion track of a target subject in the frame of image in the preset time period based on the frame of image and the first event data. The track determining unit is configured to determine a highlight track in the motion track. The first screening unit is configured to obtain, from the first event data, second event data corresponding to the highlight track. The first processing unit is configured to generate, based on the frame of image and the second event data, a highlight image corresponding to the highlight track.

According to the solution provided in the second aspect, the electronic device may record a motion process of the target subject in a scene in the time period near the shooting time of the image by using the frame of image and the event data in the time period, and does not need to record the motion process of the target subject in the scene in the time period by continuously shooting a group of images in the time period by using a standard camera. In addition, when the standard camera performs continuous shooting, power consumption and memory consumption of the electronic device are high. However, in this solution, the event data used to record motion information in the scene occupies small memory space and consumes a small amount of power. Therefore, the electronic device may record the complete motion process at minimum memory costs and minimum power consumption. Then, the electronic device may generate, by using the frame of image and the event data in the time period near the shooting time of the image, the motion track of the target subject in the image in the time period near the shooting time of the image, to generate a highlight picture based on the highlight track that is in the motion track and that a user may be interested in, and recommend the highlight picture to the user. Therefore, the electronic device may not only implement generation of a highlight picture with low power consumption and low storage space occupation, but also generate, based on the image currently shot by the user, a highlight picture desired by the user when the user does not shoot a desired highlight image. This improves user experience.

In a possible implementation, a camera mode of a camera application on the electronic device may include a highlight image mode. The data obtaining unit may be configured to: When the electronic device is in the highlight image mode, the electronic device obtains, in response to a shooting operation of the user, one frame of image shot by the standard camera and first event data that is in a preset time period near shooting time of the frame of image and that is captured by the event camera. In this way, the electronic device can help the user obtain, when shooting the frame of image, a highlight motion picture that is of a moving subject in the image and that appears in the time period near the shooting time of the image.

In a possible implementation, a gallery application on the electronic device may store a dynamic image shot in a dynamic image mode. In the dynamic image mode, the frame of image shot by the standard camera and the first event data that is in the preset time period near the shooting time of the image and that is captured by the event camera are recorded. The data obtaining unit may be configured to obtain, based on the dynamic image, the frame of image shot by the standard camera and the first event data that is in the preset time period near the shooting time of the frame of image and that is captured by an event camera. In this way, the electronic device can add a post-processing mode for the dynamic image to the gallery, to extend a highlight image generation function for the dynamic image. Therefore, the user may not only view the shot dynamic image by using the gallery application, but also view the highlight motion picture that appears in the motion process of the moving subject in the dynamic image.

In a possible implementation, the camera mode of the camera application on the electronic device may include the dynamic image mode. The electronic device may further include a dynamic image generation unit, configured to: When the electronic device is in the dynamic image mode, the electronic device obtains, in response to a shooting operation of the user, one frame of image shot by the standard camera and first event data that is in a preset time period near shooting time of the frame of image and that is captured by the event camera. Based on the frame of image and the first event data, the dynamic image is generated.

In a possible implementation, the dynamic image generation unit may be configured to: obtain, from the first event data, event data corresponding to each of a plurality of time intervals, where the plurality of time intervals are obtained by dividing the preset time period; generate, based on the frame of image and the event data corresponding to each time interval, an image corresponding to each time interval, to obtain a plurality of frames of images; and generate a dynamic image sequence based on the plurality of frames of images, where the dynamic image sequence is used to present a motion process of the target subject in the frame of image in the preset time period.

In other words, the electronic device may reconstruct, by using the frame of image shot by the standard camera and the event data in the time period near the shooting time of the image, a scene image at any moment in the time period. Therefore, the electronic device may generate a dynamic image by using the reconstructed scene image, thereby recording a dynamic process in a scene in a time period near the shooting time of the frame of image shot by the user. In this way, the electronic device can generate the dynamic image in the time period near the shooting time of the image by using the frame of image and the event data in the time period, and does not need to continuously shoot a group of images in the time period by using the standard camera to generate the dynamic image. In addition, when the standard camera performs continuous shooting, power consumption and memory consumption of the electronic device are high. However, because the event data occupies extremely small memory space and consumes extremely low power, the electronic device may record the complete motion process at minimum memory costs and minimum power consumption. Therefore, the electronic device can implement generation of the dynamic image with low power consumption and low storage space occupation.

In a possible implementation, the electronic device may further include a cover generation unit, configured to generate a cover image of the dynamic image sequence based on the highlight image. In this way, after the electronic device generates the highlight image based on the frame of image recorded in the dynamic image and the first event data in the preset time period near the shooting time of the image, the electronic device can use the highlight image as the cover image in the dynamic image. Therefore, when viewing the dynamic image, the user may quickly browse the highlight picture in the dynamic image.

In a possible implementation, the data obtaining unit may be further configured to obtain, from the first event data, event data related to the target subject as valid first event data for subsequent dynamic image generation or highlight image generation. In this way, the electronic device can record only motion information of the target subject in the scene, to implement segmentation processing on moving objects in the scene.

In a possible implementation, the track determining unit may be configured to determine the highlight track in the motion track based on a highlight track point in the motion track. In this way, the electronic device can determine, by using some track points in the motion track, the motion track that the user is interested in.

In a possible implementation, the electronic device may further include a track identification unit and a track judging unit. The track identification unit identifies a specified track point in the motion track. The specified track point includes at least one of a highest track point, a lowest track point, an intermediate track point, a start track point, an end track point, and a track mutation point. The track judging unit is configured to determine the highlight track point in the motion track based on the specified track point. In this way, the electronic device can automatically identify some special track points in the motion track, to determine the motion track that the user is interested in.

In a possible implementation, the track judging unit may be configured to: display the specified track point; and in response to a selection operation for a first track point in the specified track point, obtain the first track point as the highlight track point in the motion track. In this way, after automatically identifying some special track points in the motion track, the electronic device can display these special track points to the user on a display, and the user selects a track point of interest from the special track points. In this way, the electronic can present, to the user on the display, the motion track of the target subject in the frame of image in the time period near the shooting time of the image, and the user randomly selects a track point of interest.

In a possible implementation, the electronic device may further include a track display unit and a track selection unit. The track display unit is configured to display the motion track. The track selection unit is configured to: in response to a selection operation for a second track point in the motion track, obtain the second track point as the highlight track point in the motion track.

In a possible implementation, the track determining unit may be configured to: obtain a track segment corresponding to the highlight track point as the highlight track in the motion track, or obtain the highlight track point as the highlight track in the motion track. In this way, the highlight picture obtained when the target subject is at the highlight track point and a highlight motion process of the target subject existing before and after the highlight track point can be displayed in the highlight image generated by the electronic device.

In a possible implementation, the electronic device may further include a timeline generation unit, a time determining unit, a second screening unit, and a second processing unit. The timeline generation unit is configured to generate a motion timeline of the target subject in the preset time period based on the motion track. The time determining unit is configured to determine highlight time in the motion timeline. The second screening unit is configured to obtain, from the first event data, third event data corresponding to the highlight time. The second processing unit is configured to generate, based on the frame of image and the third event data, a highlight image corresponding to the highlight time. The electronic device may alternatively generate the highlight image based on a highlight moment that is in motion time of the target subject and that the user may be interested in, and recommend the highlight image to the user.

In a possible implementation, the time determining unit may be configured to determine the highlight time in the motion track based on a highlight moment in the motion timeline. In this way, the electronic device can determine, by using some moments in the motion time of the target subject, the highlight moment that the user is interested in.

In a possible implementation, the electronic device may further include a time identification unit and a time judging unit. The time identification unit identifies a specified moment in the motion timeline. The specified moment includes at least one of a start moment, an intermediate moment, an end moment, and a moment corresponding to the highlight track point in the motion track. The time judging unit is configured to determine the highlight moment in the motion timeline based on the specified moment. In this way, the electronic device can automatically identify some special moments in the motion time of the target subject, to determine the highlight moment that the user is interested in.

In a possible implementation, the time judging unit may be configured to: display the specified moment; and in response to a selection operation for a first moment in the specified moment, obtain the first moment as the highlight moment in the motion timeline. In this way, after automatically identifying some special moments in the motion time of the target subject, the electronic device can display these special moments to the user on the display, and the user selects a moment of interest from the special moments.

In a possible implementation, the electronic device may further include a time display unit and a time selection unit. The time display unit is configured to display the motion timeline. The time selection unit is configured to: in response to a selection operation for a second moment in the motion timeline, obtain the second moment as the highlight moment in the motion timeline. In this way, the electronic can present, to the user on the display, the motion timeline of the target subject in the frame of image in the time period near the shooting time of the image, and the user randomly selects a moment of interest.

In a possible implementation, the time determining unit may be configured to: obtain a time period corresponding to the highlight moment as the highlight time in the motion track; or obtain the highlight moment as the highlight time in the motion track. In this way, the highlight moment of the target subject and the highlight motion process of the target subject existing before and after the highlight moment can be displayed in the highlight image generated by the electronic device.

In a possible implementation, the electronic device may further include a density analysis unit, a third screening unit, and a third processing unit. The density analysis unit is configured to determine a highlight time range in the preset time period based on density of the first event data. The third screening unit is configured to obtain, from the first event data, fourth event data corresponding to the highlight time range. The third processing unit is configured to generate, based on the frame of image and the fourth event data, a highlight image corresponding to the highlight time range.

It may be understood that an image that the user is generally interested in and wants to shoot is usually an image with a large motion amplitude or a small motion amplitude of a target subject in a scene. In this case, the event data is usually dense or sparse. Therefore, in this solution, the electronic device determines, by using the density of the first event data, the highlight time range that the user is interested in, and selects, from the first event data, the fourth event data that is generated in the highlight time range. In this way, the electronic device can reconstruct, based on the frame of image and the fourth event data in the highlight time range, the highlight picture of the target subject in the highlight time range that the user is interested in.

In a possible implementation, the density analysis unit may be configured to determine, based on the density of the first event data, a specified time range that meets a preset density condition as the highlight time range in the preset time period. The preset density condition includes at least one of the following: The density is maximum density in the preset time period, the density is lower than first density, the density is higher than second density, and the density is higher than the first density and lower than the second density. In this way, the electronic device can determine, by identifying some time ranges in which the first event data is dense or sparse, a time range that the user is interested in.

In a possible implementation, the electronic device may further include a range display unit and a range selection unit. The range display unit is configured to display the specified time range. The range selection unit is configured to: in response to a selection operation for a target time range in the specified time range, obtain the target time range as the highlight time range in the preset time period. In this way, after automatically identifying some time ranges in which the first event data is dense or sparse, the electronic device can display these special time ranges to the user on the display, and the user selects a time range of interest from the special time ranges.

In a possible implementation, the density analysis unit may also be configured to: display a density distribution diagram of the first event data based on the density of the first event data; and in response to a selection operation for target density distribution in the density distribution diagram, obtain a time range corresponding to the target density distribution as the highlight time range in the preset time period. In this way, the electronic device can present density distribution of the first event data to the user on the display, and the user selects a density distribution region of interest, so that the electronic device can determine, based on the density distribution region of interest, the time range that the user is interested in.

In a possible implementation, the electronic device may further include a frame rate determining unit, configured to determine a frame rate of the highlight image based on density of the fourth event data. In this way, the electronic device can adaptively adjust a frame rate of the highlight image based on the density of the event data.

According to a third aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the image processing method according to any possible implementation of the first aspect.

According to a fourth aspect, this application provides an image processing apparatus. The apparatus is included in an electronic device, and the apparatus has a function of implementing behavior of the electronic device in the method according to any one of the first aspect and the possible implementations of the first aspect. The function may be implemented by hardware, or may be implemented by hardware executing corresponding software. The hardware or the software includes one or more modules or units corresponding to the function.

According to a fifth aspect, this application provides a chip system, and the chip system is applied to an electronic device. The chip system includes one or more interface circuits and one or more processors. The interface circuit and the processor are connected through a line. The interface circuit is configured to: receive a signal from a memory of the electronic device, and send the signal to the processor. The signal includes computer instructions stored in the memory. When the processor executes the computer instructions, the electronic device performs the image processing method according to any possible implementation of the first aspect.

According to a sixth aspect, this application provides a computer storage medium, including computer instructions. When the computer instructions are run on an electronic device, the electronic device is enabled to perform the image processing method according to any possible implementation of the first aspect.

According to a seventh aspect, this application provides a computer program product. When the computer program product runs on a computer, the computer is enabled to perform the image processing method according to any possible implementation of the first aspect.

It may be understood that, for beneficial effects that can be achieved by the electronic device in the third aspect, the apparatus in the fourth aspect, the chip system in the fifth aspect, the computer storage medium in the sixth aspect, and the computer program product in the seventh aspect, refer to the beneficial effects of any one of the first aspect and the possible implementations of the first aspect. Details are not described herein again.

### BRIEF DESCRIPTION OF DRAWINGS

FIG. 1A is a diagram of a hardware structure of an electronic device according to an embodiment of this application;
FIG. 1B is a diagram of an example of a software architecture of an electronic device according to an embodiment of this application;
FIG. 2(a) to FIG. 2(d) are interface diagrams 1 of an electronic device according to an embodiment of this application;
FIG. 3(a) and FIG. 3(b) are interface diagrams 2 of an electronic device according to an embodiment of this application;
FIG. 4(a) to FIG. 4(d) are interface diagrams 3 of an electronic device according to an embodiment of this application;
FIG. 5(a) to FIG. 5(d) are interface diagrams 4 of an electronic device according to an embodiment of this application;
FIG. 6 is an interface diagram 5 of an electronic device according to an embodiment of this application;
FIG. 7(a) to FIG. 7(d) are interface diagrams 6 of an electronic device according to an embodiment of this application;
FIG. 8(a) to FIG. 8(d) are interface diagrams 7 of an electronic device according to an embodiment of this application;
FIG. 9A is a schematic flowchart of an image processing method according to an embodiment of this application;
FIG. 9B-1 to FIG. 9B-3 are a schematic flowchart of another image processing method according to an embodiment of this application;

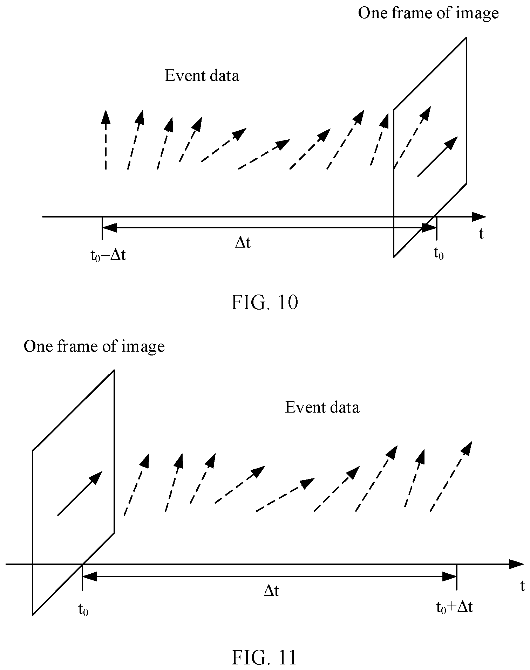

FIG. 10 is a diagram 1 of event data according to an embodiment of this application;
FIG. 11 is a diagram 2 of event data according to an embodiment of this application;

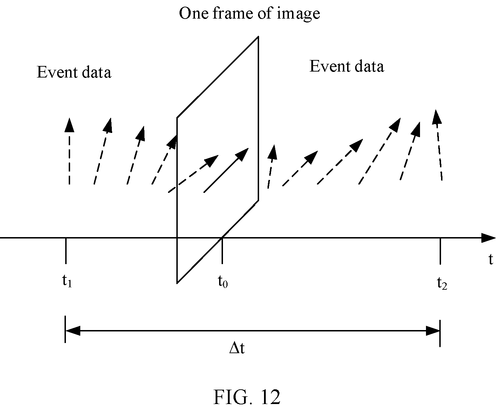

FIG. 12 is a diagram 3 of event data according to an embodiment of this application;

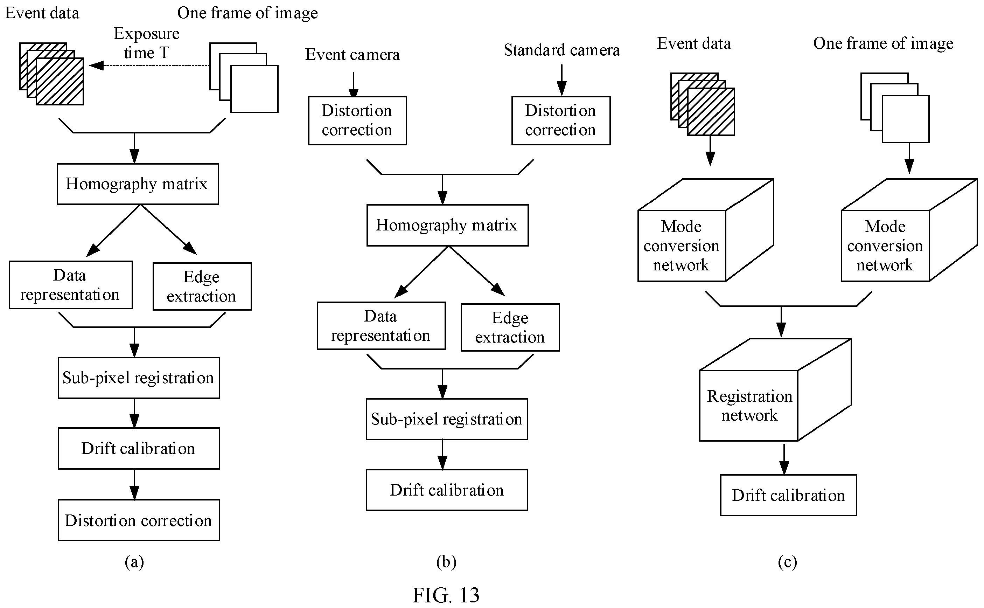

FIG. 13 is a schematic flowchart of a spatial registration method according to an embodiment of this application;

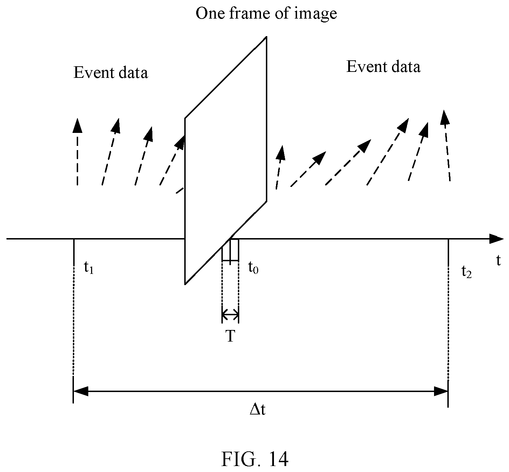

FIG. 14 is a diagram of exposure time according to an embodiment of this application;

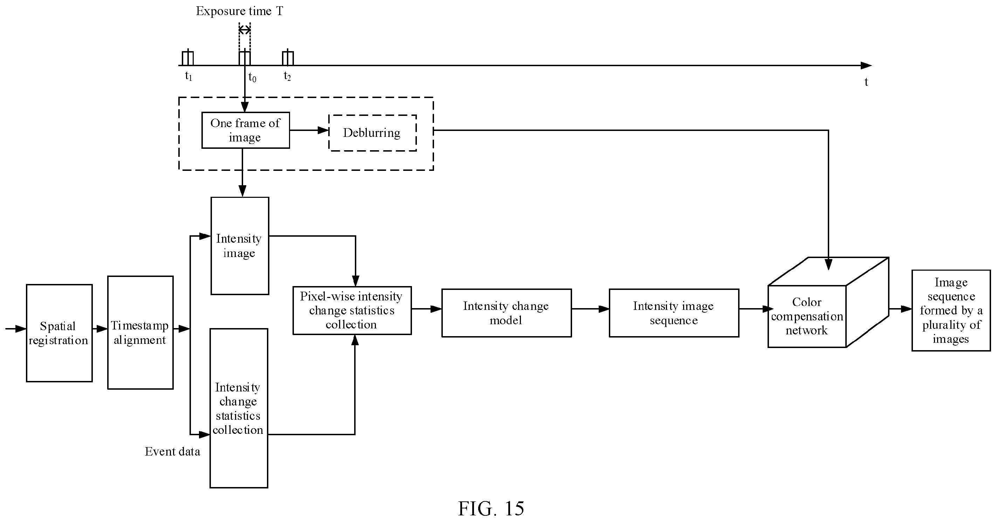

FIG. 15 is a schematic flowchart of a fusion generation method according to an embodiment of this application;

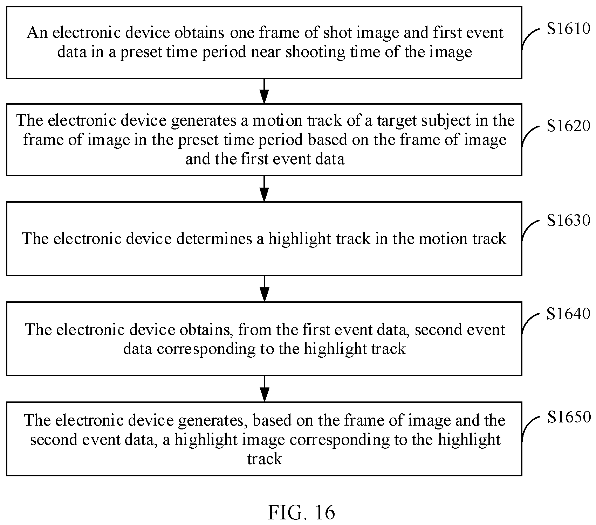

FIG. 16 is a schematic flowchart of an image processing method according to an embodiment of this application;

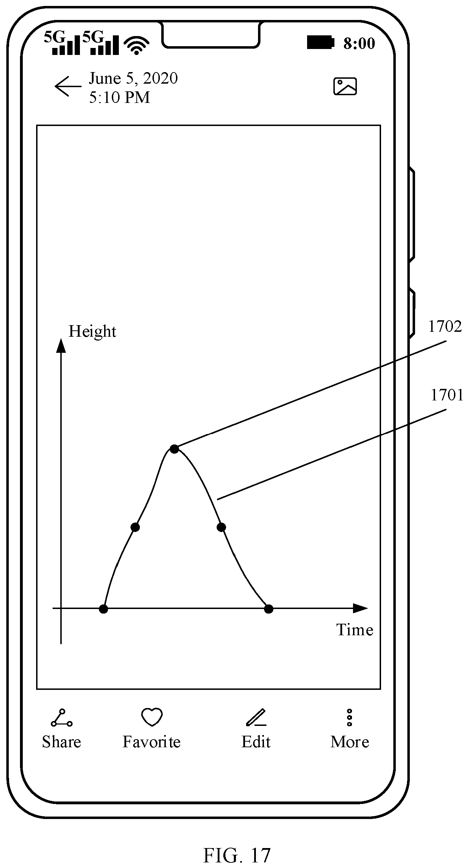

FIG. 17 is an interface diagram 8 of an electronic device according to an embodiment of this application;

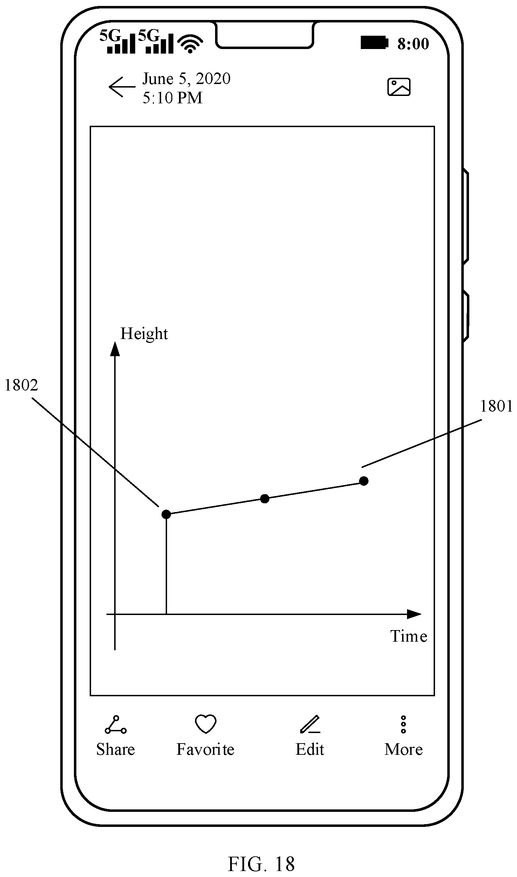

FIG. 18 is an interface diagram 9 of an electronic device according to an embodiment of this application;

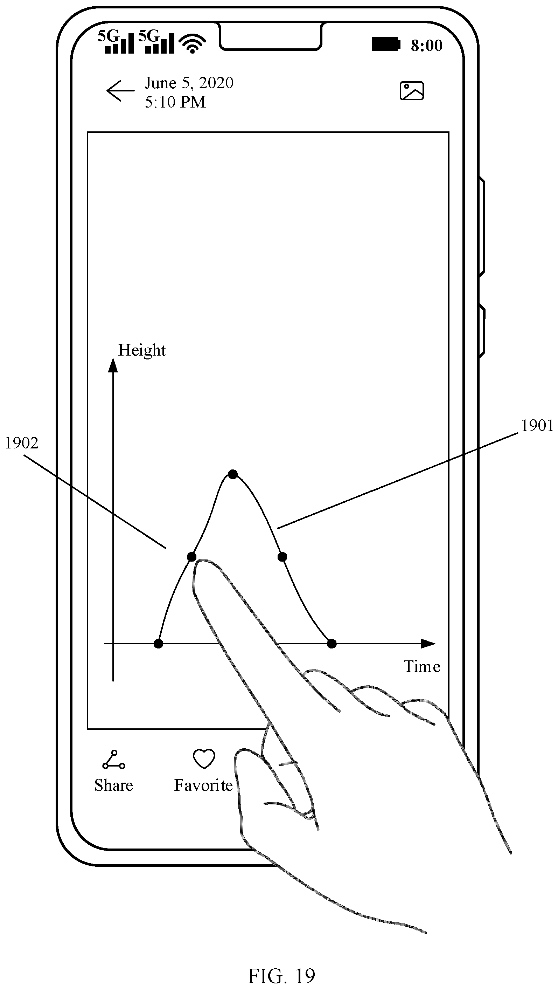

FIG. 19 is an interface diagram 10 of an electronic device according to an embodiment of this application;

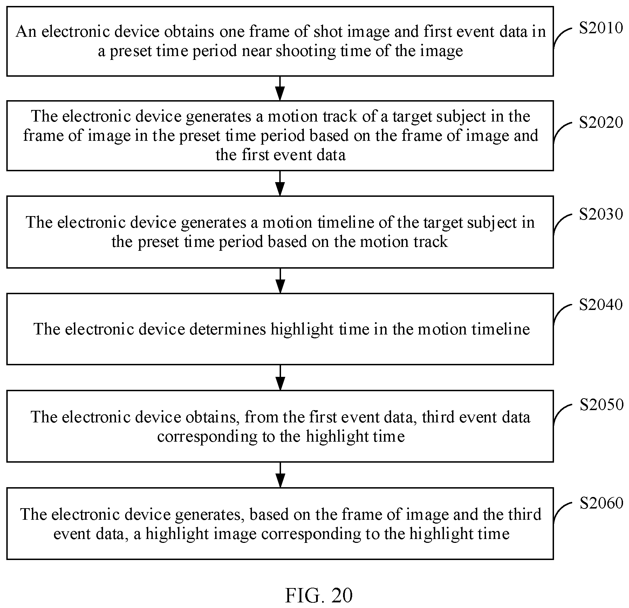

FIG. 20 is a schematic flowchart of an image processing method according to an embodiment of this application;

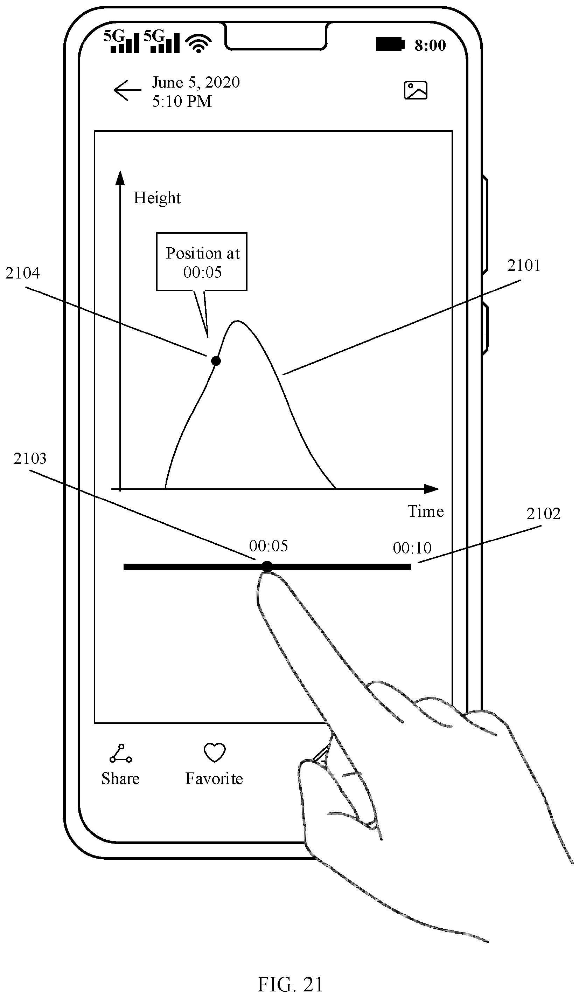

FIG. 21 is an interface diagram 11 of an electronic device according to an embodiment of this application;

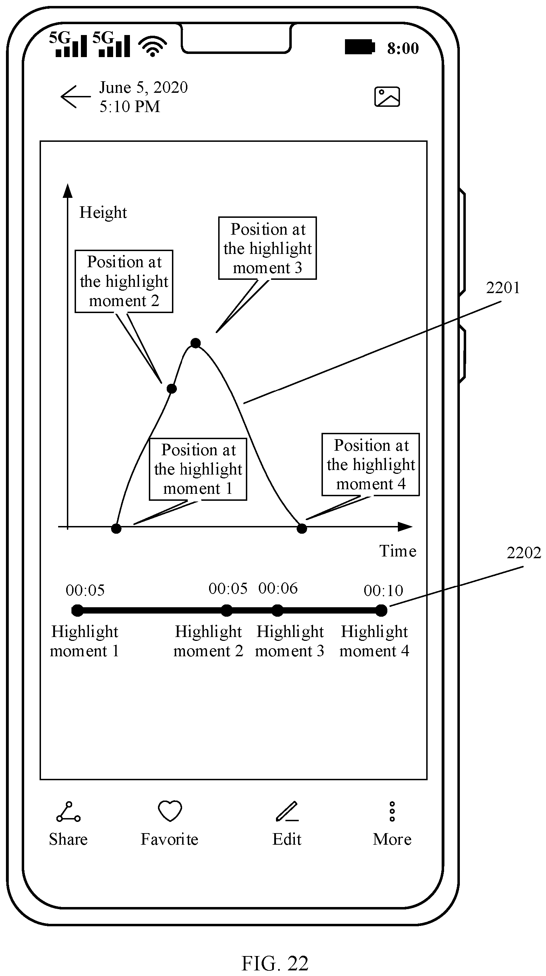

FIG. 22 is an interface diagram 12 of an electronic device according to an embodiment of this application;

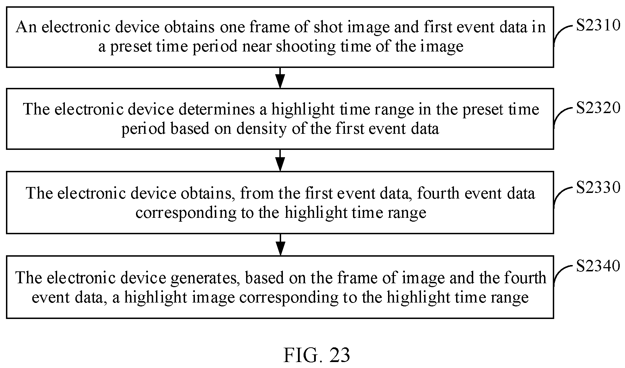

FIG. 23 is a schematic flowchart of an image processing method according to an embodiment of this application;

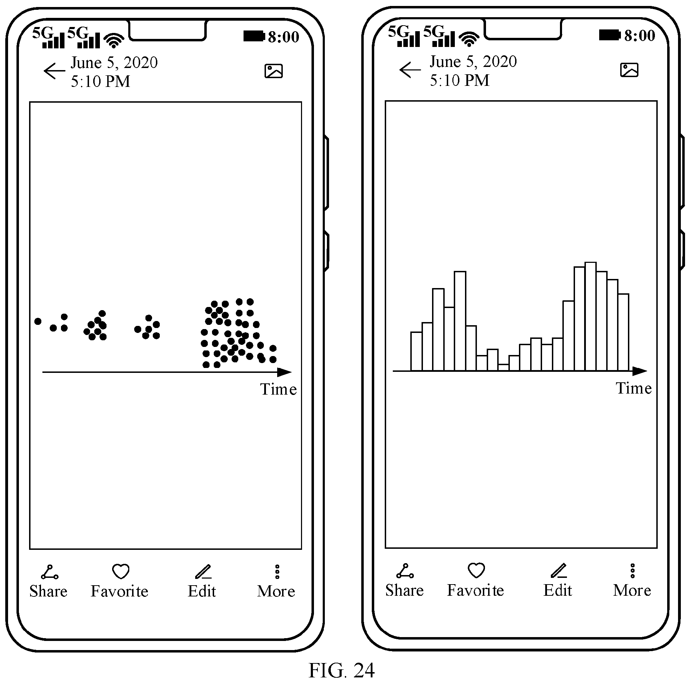

FIG. 24 is an interface diagram 13 of an electronic device according to an embodiment of this application; and

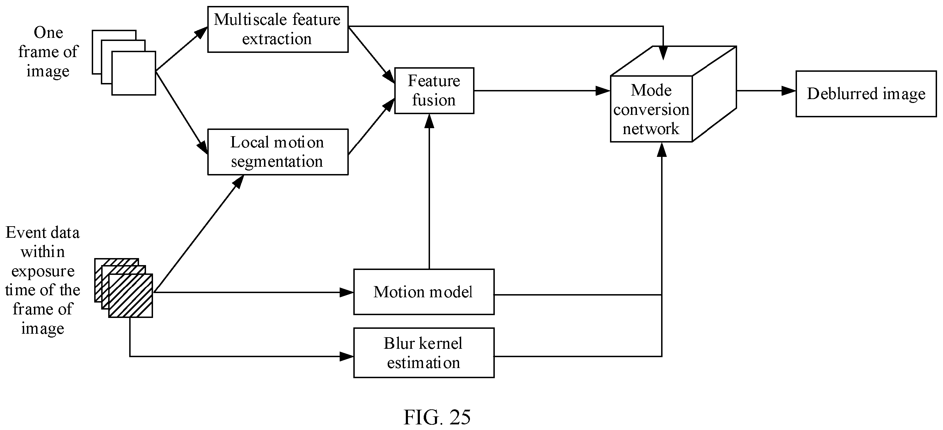

FIG. 25 is a schematic flowchart of an image deblurring method according to an embodiment of this application.

### DESCRIPTION OF EMBODIMENTS

The following describes the technical solutions in embodiments of this application with reference to the accompanying drawings in embodiments of this application. The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. It should be understood that, in this application, "at least one" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural.

The image processing method provided in embodiments of this application may be applied to an electronic device. The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device/a virtual reality (virtual reality, VR) device, or the like. A specific type of the electronic device is not particularly limited in embodiments of this application.

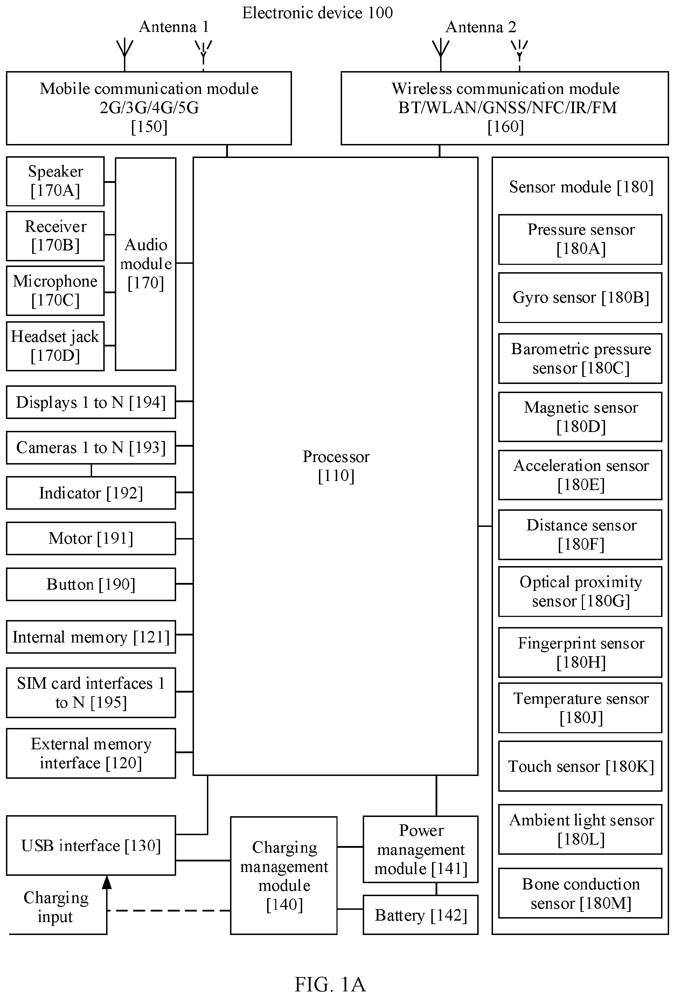

For example, FIG. 1A is a diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a gravity sensor, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, and reduces waiting time of the processor 110, thereby improving system efficiency.

In this embodiment of this application, the processor 110 may control the camera 193 to obtain image data and event data through photographing, generate a dynamic image sequence based on one frame of image output by the camera 193 and event data in a preset time period near shooting time of the image, and then generate, based on the dynamic image sequence, a dynamic image or a video corresponding to the image. This implements recording of a dynamic process in a short time period before a user shoots an image, or recording of a dynamic process in a short time after a user shoots an image, or recording of a dynamic process in a short time before and after a user shoots an image.

In an embodiment of this application, the processor 110 may also generate, based on the event data in the preset time period near the shooting time of the image, a motion track of a target subject in the image in a preset time period, and generate, based on the motion track and a single frame of image, a highlight image or a highlight video corresponding to a highlight track in the preset time period. This implements recording of a highlight moment or a highlight instant in a short time period before the user shoots the image, or recording of a highlight moment or a highlight instant in a short time period after the user shoots the image, or recording of a highlight moment or a highlight instant in a short time period before and after the user shoots the image.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset.

The UART interface is a universal serial data bus, and is configured to perform asynchronous communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing an audio through the headset. The interface may be further configured to connect to another electronic device such as an AR device.

It can be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect the battery 142, the charging management module 140, and the processor 110. The power management module 141 receives input from the battery 142 and/or the charging management module 140, to supply power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communications processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communications technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diode, QLED), or the like. In some embodiments, the electronic device 100 may include one or N displays 194, where N is a positive integer greater than 1.

In an embodiment of this application, the display 194 may display the image data obtained by the camera 193 through photographing. The display 194 may also display the dynamic image or the video generated by the processor 110. The dynamic image or the video is generated by the processor 110 based on the frame of image output by the camera 193 and the event data in the preset time period near the shooting time of the image. The display 194 may further display the motion track that is of the target subject in the image and that is generated by the processor 110. The motion track is generated by the processor 110 based on the event data in the preset time period near the shooting time of the image. The display 194 may further display the highlight image or the highlight video generated by the processor 110. The highlight image or the highlight video is generated by the processor 110 based on the motion track of the target subject and the frame of image.

In some embodiments, the display 194 may also display the event data. Optionally, the processor 110 may alternatively superimpose event data in a time period to generate an event frame, and then the display 194 displays the event frame.

The electronic device 100 may implement the photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature in a photographing scene. In some embodiments, the ISP may be disposed in the camera 193.

In this embodiment of this application, a type of the camera 193 may be an event camera (event camera). The event camera is configured to capture event data. The event data may be simply understood as "a change in pixel brightness". In other words, the event camera outputs a change in pixel brightness. There is a calculation circuit under each photosensitive unit (each pixel) of the event camera. The circuit may convert light intensity detected by the photosensitive element into a voltage value. When the voltage value reaches a threshold, the event camera is triggered to output the event data.

It may be understood that the event camera may be deployed in the electronic device, or may be independent of the electronic device. When the event camera is independent of the electronic device, the event camera may still establish a connection to the electronic device to transmit the event data to the electronic device.

In an embodiment of this application, the type of the camera 193 may alternatively be a standard camera configured to capture a static image or a video. Optionally, the standard camera may be an RGB (red-green-blue, RGB) camera for capturing colorful images, or may be a black-white camera for capturing grayscale images. A type of the standard camera is not limited in embodiments of this application, provided that the standard camera can capture a static image or a video.

It may be understood that, for the standard camera, an optical image of an object may be generated through a lens and projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP may convert the digital image signal into an image signal in a standard format such as RGB or YUV.

In some embodiments, the type of the camera 193 may alternatively be another camera that may capture both the event data and the static image. For example, a dynamic and active-pixel vision sensor (dynamic and active-pixel vision sensor, DAVIS) may capture, on the basis of capturing the event data, an intensity image (intensity image) similar to that captured by the standard camera. The intensity image is also referred to as a grayscale (grayscale) image. A pixel value of each pixel in the intensity image indicates brightness or a grayscale of the pixel. Generally, a range of the pixel value is [0, 255], where 0 indicates black (lowest brightness or a lowest grayscale); 255 indicates white (highest brightness or a highest grayscale); and other integers are between the lowest brightness or the lowest grayscale and the highest brightness or the highest grayscale.

In some embodiments, the electronic device 100 may include one or N cameras 193, where N is a positive integer greater than 1. Optionally, when the electronic device 100 includes one camera 193, the type of the camera 193 may be a DAVIS camera that can capture both event data and a static image. Optionally, when the electronic device 100 includes a plurality of cameras 193, the plurality of cameras 193 may include an event camera and a standard camera, to capture both event data and a static image.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 can play or record videos in a plurality of encoding formats such as moving picture experts group (moving picture experts group, MPEG)-1, MPEG-2, MPEG-3, and MPEG-4.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the electronic device 100, and the like. In addition, the internal memory 121 may include a high-speed random access memory, or may include a nonvolatile memory, for example, at least one magnetic disk storage device, a flash memory device, or a universal flash storage (universal flash storage, UFS).

In an embodiment of this application, the memory may be configured to: store the event data and the static image that are output by the camera 193, and obtain the dynamic image sequence, the highlight image, and the like based on the event data.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on an angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The distance sensor 180F is configured to measure a distance. The electronic device 100 may measure the distance by using infrared or laser. In some embodiments, in a photographing scenario, the electronic device 100 may measure the distance by using the distance sensor 180F, to implement fast focusing.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 in a position different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100. In some embodiments, the electronic device 100 may implement button photographing by using a receive button and the volume button.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The electronic device 100 may be a terminal device carrying an iOS^{®} operating system, an Android^{®} operating system, a Microsoft^{®} operating system, or another operating system. The operating system carried on the electronic device is not limited in embodiments of this application.

A software system of the electronic device 100 may use a layered architecture, an event-driven architecture, a microkernel architecture, a micro service architecture, or a cloud architecture. In an embodiment of this application, an Android^{®} system with a layered architecture is used as an example to illustrate a software structure of the electronic device 100.

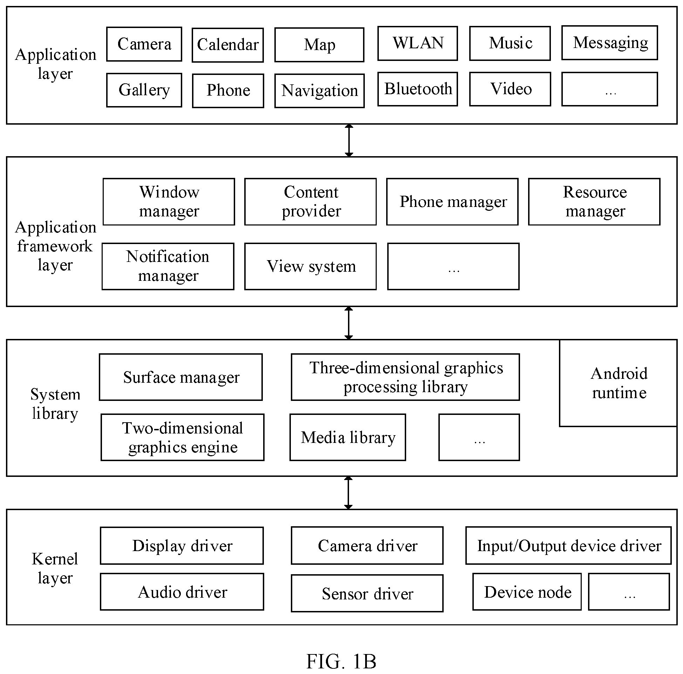

FIG. 1B is a block diagram of the software structure of the electronic device 100 according to an embodiment of this application. In a layered architecture, software is divided into several layers, and each layer has a clear role and task. The layers communicate with each other through a software interface. In some embodiments, the Android^{®} system is divided into four layers: an application layer, an application framework layer, an Android runtime (Android runtime) and a system library, and a kernel layer from top to bottom. The application layer may include a series of application packages.

As shown in FIG. 1B, the application packages may include applications such as Camera, Gallery, Calendar, Phone, Map, Navigation, WLAN, Bluetooth, Music, Video, and Messaging.An application on the electronic device may be a native application, or may be a third-party application. This is not limited in embodiments of this application.

The application framework layer provides an application programming interface (application programming interface, API) and a programming framework for an application at the application layer. The application framework layer includes some predefined functions.

As shown in FIG. 1B, the application framework layer may include a window manager (window manager service, WMS), a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enable the data to be accessed by an application. The data may include a video, an image, an audio, calls that are made and received, a browsing history and a bookmark, a phone book, and the like.

The view system includes visible controls such as a control for displaying a text and a control for displaying an image. The view system may be used to construct an application. A display interface may include one or more views. For example, a display interface including an SMS message notification icon may include a text display view and an image display view.

The phone manager is used to provide a communication function of the electronic device 100, for example, management of a call status (including answering, declining, or the like).

The resource manager provides various resources such as a localized character string, an icon, an image, a layout file, and a video file for an application.

The notification manager enables an application program to display notification information in a status bar, and may be configured to convey a notification message. The notification manager may automatically disappear after a short pause without requiring a user interaction. For example, the notification manager is used to notify download completion, provide a message notification, and the like. The notification manager may alternatively be a notification that appears in a top status bar of the system in a form of graph or scroll bar text, for example, a notification of an application that is run in a background, or may be a notification that appears on a screen in a form of dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android^{®} system.

The kernel library includes two parts: One part is a performance function that needs to be invoked by a Java language, and the other part is the kernel library of Android.

The application layer and the application framework layer run on the virtual machine. The virtual machine executes Java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording of audios and videos in a plurality of commonly used formats, static image files, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer may include a display driver, an input/output device driver (for example, a keyboard, a touchscreen, a headset, a speaker, or a microphone), a device node, a camera driver, an audio driver, a sensor driver, and the like. A user performs an input operation by using an input device. The kernel layer may generate a corresponding original input event based on the input operation, and store the original input event in the device node.

The following describes an example of a working procedure of software and hardware of the electronic device 100 with reference to a photographing scene.

When the electronic device 100 receives an operation of pressing a button or touching a control, a corresponding hardware interrupt is sent to the kernel layer. The kernel layer processes the pressing operation or the touch operation into an original input event (including information such as touch coordinates and a timestamp of the touch operation). The original input event is stored at the kernel layer. The application framework layer obtains the original input event from the kernel layer, and identifies a button or a control corresponding to the input event. Optionally, for example, a camera application is installed on the electronic device 100, and the pressing operation or the touch operation is an operation of photographing by using a camera. The camera application invokes an interface at the application framework layer to start the camera application, to control, by invoking the camera driver at the kernel layer, the camera 193 to shoot an image and obtain event data through photographing by using the camera driver.

Based on the foregoing descriptions of the software and hardware of the electronic device in this application, the following describes in detail a procedure of an image processing method provided in this application with reference to the accompanying drawings.

Currently, a camera application is installed on an electronic device like a mobile phone or a tablet. When a user wants to use the electronic device to perform photographing, the user may select an application icon of the camera application on the electronic device. In response to a trigger operation performed by the user on the application icon of the camera application, the electronic device may start a camera, so that the user can use the electronic device to perform operations such as photographing and video recording.

Currently, when the user uses the electronic device to shoot some memorable highlight pictures, because some highlight pictures are fleeting and unpredictable, for example, a picture of fireworks blooming in the air, a picture of lightning bursting in the air, a picture of a launch object (for example, a bullet in a gun) flying out of a launch apparatus, and a fixed-point picture of a person jumping to a highest point in the air, it is difficult for the user to shoot a desired highlight picture only based on experience.

In view of this, embodiments of this application provide an image processing method and an electronic device. When shooting one frame of image, the electronic device may also obtain event data in a time period near shooting time of the image through photographing, and then the electronic device may reconstruct, based on the image and the event data in the time period near the shooting time of the image, a highlight motion picture that is of a moving subject in the image and that appears in the time period near the shooting time of the image. In this way, even if no highlight picture is captured in the image shot by the user, the electronic device can generate a highlight picture based on the image currently shot by the user. This improves user experience.

In an embodiment of this application, the electronic device may include an event camera. The event camera obtains event data through photographing at a high frame rate. To be specific, brightness value changes of all pixels are continuously obtained through a photosensitive device in a continuous period, and when a brightness value in a position of a pixel changes, and the brightness change reaches a specific threshold, the camera outputs an event signal. When an object moves or light changes in a scene, brightness of a large quantity of pixels changes. In this case, a series of event signals are generated, and the event data may be output in a form of event stream (event stream). Optionally, after a specific quantity of event streams is accumulated, an event frame may be generated.

Specifically, the event camera may generate a synchronous event signal or an asynchronous event signal based on a brightness change of a current pixel. If the brightness of the current pixel increases by more than a specific threshold, the event camera generates a positive signal. If the brightness of the current pixel decreases by more than the specific threshold, the event camera generates a negative signal.

The event signal generated by the event camera may include pixel coordinates, a timestamp, and a polarity, and may be denoted as an event signal e={x, y, t, p}. Herein, x and y indicate a position in which an event is generated, namely, pixel coordinates; t indicates a timestamp obtained at a moment when the event is generated; and p indicates a polarity. In some embodiments, p may be represented by "0, 1" or "-1, 1", where 0 or -1 indicates that the brightness changes from high to low (namely, the negative signal generated when the brightness decreases by more than the specific threshold), and 1 indicates that the brightness changes from low to high (namely, the positive signal generated when the brightness increases by more than the specific threshold).

It may be understood that, because the event camera can quickly respond to the brightness change, the event camera can record motion information of a moving object in a photographing scene. In addition, because the motion information recorded by the event camera is stored by using event data, and a data form of the event data has only one or two states (non-polarity 0 and polarity 1, or positive polarity 1 and negative polarity -1), power consumption of the device can be greatly reduced, and memory space of the device can be greatly saved. Therefore, in the solution provided in this application, even if the frame of image is shot by the electronic device, the event data in the time period near the shooting time of the image needs to be obtained through photographing. However, because the event data occupies extremely small memory space and consumes extremely low power, for an electronic device of a mobile terminal type, for example, a mobile phone or a tablet, when the electronic device with limited battery power is brought outside, the solution provided in this application does not cause excessive battery energy consumption, and has little impact on a battery life of the electronic device. The electronic device may implement generation of the highlight picture with low power consumption and low storage space occupation.

Before the image processing method provided in embodiments of this application is described in detail, an application scenario in embodiments of this application is first described.

The electronic device may include a camera application (application, APP). After detecting an operation of starting the camera application by a user, the electronic device may start the camera application. The operation of starting the camera application by the user may be a tapping operation of the user on an application icon of the camera application, or may be a pressing operation of the user on a specific physical button or a button combination on the electronic device, or may be a voice indication of the user, a shortcut gesture operation (for example, a gesture of drawing a circle track) of the user on a screen of the electronic device, or an air gesture operation of the user. This is not limited in embodiments of this application. After the electronic device starts the camera application, the user may use the electronic device to perform operations such as photographing and video recording.

In an embodiment of this application, the electronic device may include an event camera and a standard camera. The event camera may be configured to capture event data in a scene, and the standard camera may be configured to capture a static image or a video in the scene. Optionally, the standard camera may be an RGB (red-green-blue) camera configured to output an RGB image, or may be a black-white camera configured to output a grayscale image. A type of the standard camera is not limited in embodiments of this application.

Optionally, an example in which the standard camera is an RGB camera is used. The electronic device may support any hybrid hardware system including the event camera and the RGB camera, including but not limited to a binocular system (that is, the RGB camera and the event camera are placed in parallel), a hybrid sensor (hybrid sensor) system (that is, pixels of the event camera and the RGB camera are mixed together), and a spectroscope system (that is, the RGB camera and the event camera are combined by using a spectroscope).

After starting the camera application, the electronic device may capture a static image in the scene by using the standard camera, and capture event data in the scene by using the event camera. It may be understood that a device for capturing the static image and the event data is not limited in embodiments of this application. For example, in some embodiments, the electronic device may alternatively include an event camera that outputs both event data and a static image, for example, a DAVIS (dynamic and active-pixel vision sensor) event camera. In this way, the electronic device can directly obtain the static image and the event data by using the event camera.

Generally, the camera application may support a plurality of camera modes for shooting static images or videos. For example, the plurality of camera modes include but are not limited to a night mode, a portrait mode, a photo mode, a video mode, a professional mode, and a slow-motion mode. In an implementation, in addition to the plurality of commonly used camera modes, the camera application may also support a highlight image mode. In the highlight image mode, the camera application may generate, based on one frame of image currently shot by the standard camera and event data that is in a time period near shooting time of the image and that is captured by the event camera, a highlight motion picture that is of a moving subject in the image and that appears in the time period near the shooting time of the image, namely, a highlight image. Optionally, the highlight image may be one or more frames of highlight moment pictures, or may be a highlight video that includes a highlight moment picture. This is not limited in this application.

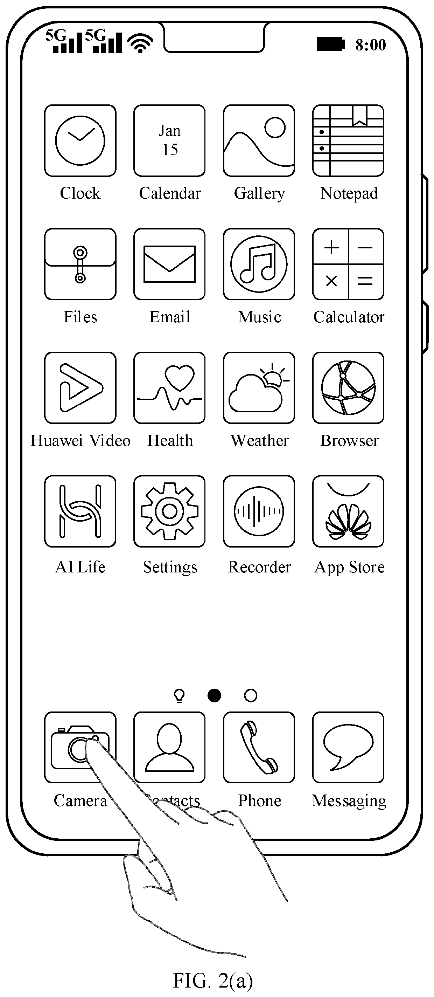

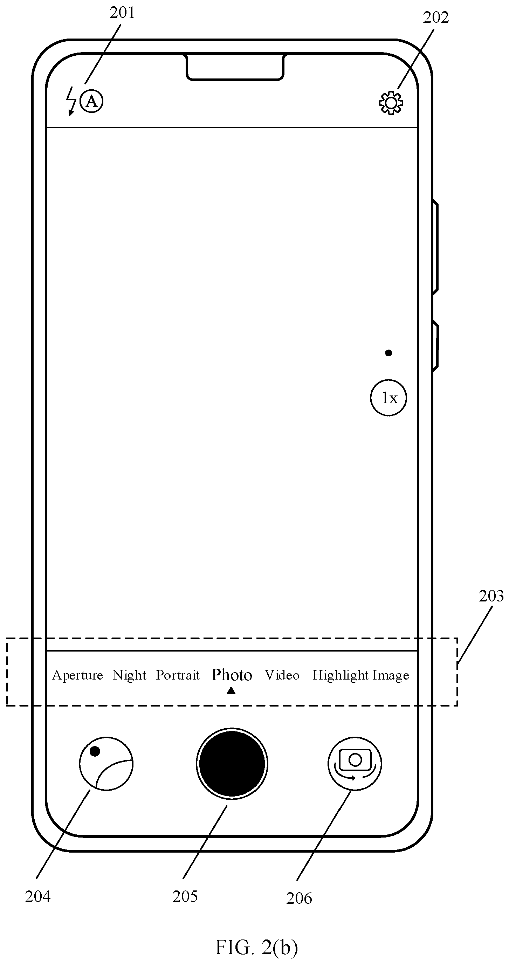

For example, an example in which the electronic device is a mobile phone is used. FIG. 2(a) shows an implementation in which the user starts the camera application. As shown in FIG. 2(a), the user taps a camera application icon displayed on a display of the mobile phone, to input a camera starting instruction. In response to receiving the camera starting instruction of the user, the mobile phone starts the camera, and displays a photographing interface shown in FIG. 2(b).

The photographing interface shown in FIG. 2(b) is a photographing interface existing when the mobile phone is in a photo mode. The photographing interface of the mobile phone includes a flash control 201, a settings control 202, a switch bar 203, a display control 204 for a previously shot image, a shutter button control 205, a front/rear camera switch control 206, and the like. The switch bar 203 includes a plurality of camera modes, and the user may implement switching between the plurality of camera modes by sliding the switch bar leftward or rightward. For example, the switch bar 203 shown in FIG. 2(b) includes Aperture, Night, Portrait, Photo, Video, and Highlight Image. Other modes that are not displayed in FIG. 2(b) are hidden, and the user may slide the switch bar leftward or rightward to show the hidden modes.

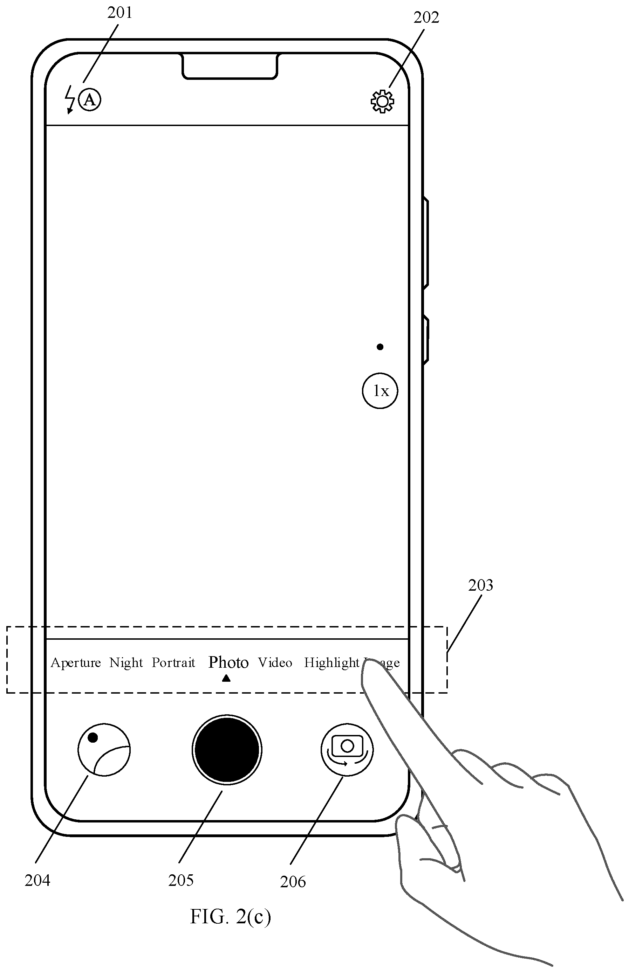

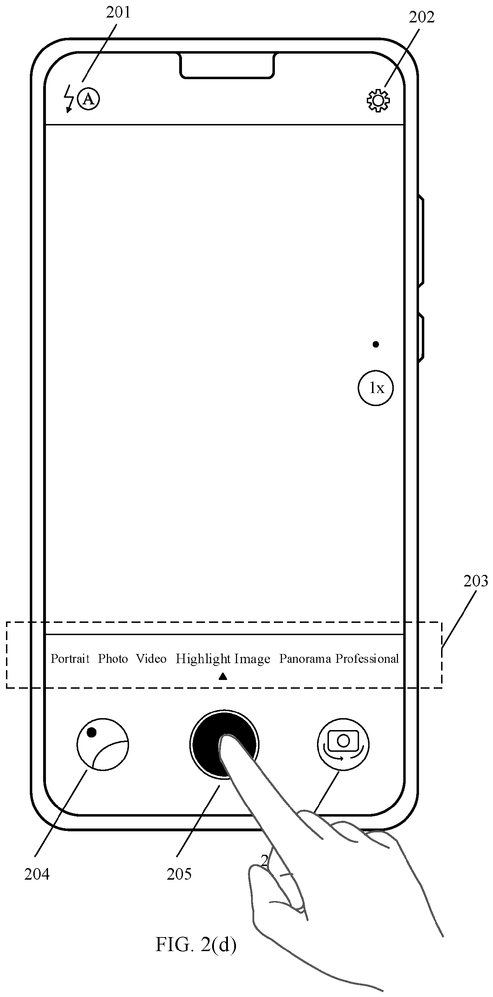

When the user wants to shoot some highlight pictures that are difficult to capture, as shown in FIG. 2(c), the user may tap a highlight picture option in the switch bar 203, so that the mobile phone switches from the photo mode shown in FIG. 2(c) to the highlight image mode shown in FIG. 2(d).

The mobile phone enters the highlight image mode in response to the trigger operation of the user on the highlight image option. As shown in FIG. 2(d), after the user taps the shutter button control 205, the mobile phone may shoot one frame of image by using a standard camera, and the mobile phone may automatically generate a highlight image according to the image processing method in embodiments of this application. Optionally, the display control 204 on the photographing interface may be used to display a thumbnail of the frame of shot image, or may be used to display a thumbnail of the generated highlight image. Optionally, both the frame of shot image and the generated highlight image may be stored in a gallery.

In another implementation, the highlight image mode may alternatively be used as a function option and incorporated into a specified mode of the camera application, so that the camera application can support a highlight image generation function in the specified mode. In other words, in the specified mode, after the highlight image function is enabled, the camera application can generate the highlight image. Optionally, the specified mode may include but is not limited to a mode that can support shooting of a single frame of static image, for example, a photo mode, a portrait mode, and a night mode. The specified mode may be set according to an actual requirement.

It may be understood that, in the specified mode, after the highlight image function is disabled, the camera application may restore an original function of the specified mode. For example, when the specified mode is the photo mode, after the highlight image function is disabled, the camera application may restore an original function of the photo mode, namely, a function of shooting a single frame of static image in a scene by using the standard camera.

Optionally, the camera application may provide, in the specified mode, a function of enabling and a function of disabling the highlight image function for the user to manually select whether to trigger the highlight image function. Optionally, when the camera application is in the specified mode, the highlight image function may alternatively be automatically enabled, and the user does not need to manually trigger the function.

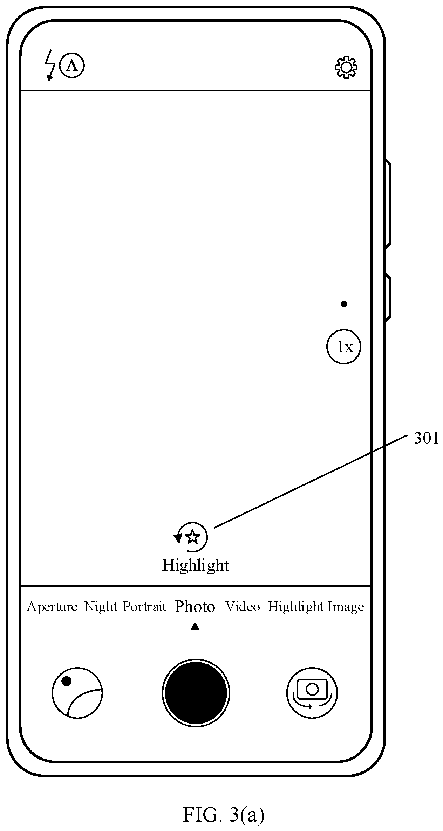

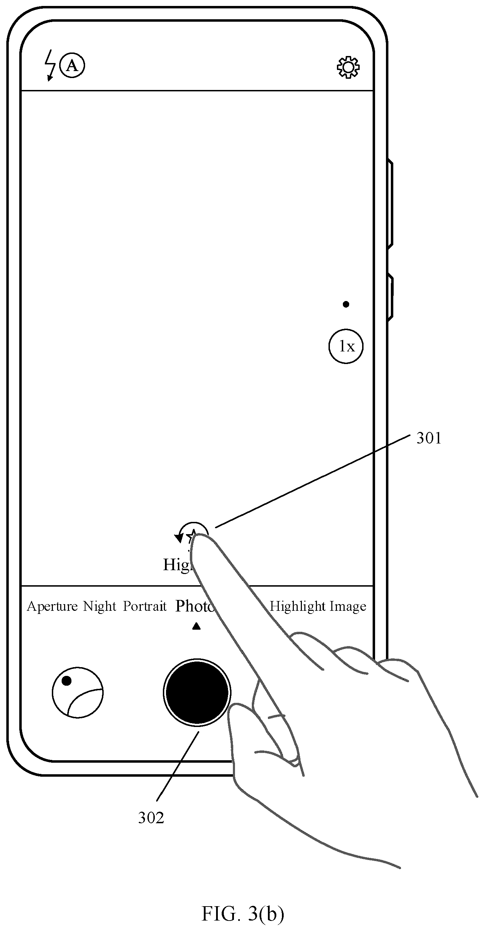

For example, the electronic device is a mobile phone. A photographing interface shown in FIG. 3(a) is a photographing interface existing when the mobile phone is in the photo mode. The photographing interface of the mobile phone may include a highlight image control 301. When the user wants to shoot some highlight pictures that are difficult to capture, as shown in FIG. 3(b), the user may tap the highlight image control 301, so that the mobile phone enables the highlight image function. In this way, after the user taps a shutter button control 302, the mobile phone may not only shoot one frame of image by using a standard camera, but also automatically generate a highlight image according to the image processing method in embodiments of this application. Optionally, both the frame of shot image and the generated highlight image may be stored in a gallery.

It may be understood that the user may also tap the highlight image control 301 again, so that the mobile phone disables the highlight image function. In this way, after the user taps the shutter button control 302, the mobile phone can shoot the frame of image by using only the standard camera, and store the frame of image to the gallery.

In some embodiments, the camera application may also support a dynamic image mode. In the dynamic image mode, the camera application may generate, based on one frame of image currently shot by the standard camera and event data that is in a time period near shooting time of the image and that is captured by an event camera, an image having a dynamic effect, namely, a dynamic image. The dynamic image is usually an image for which a dynamic effect is achieved by switching and displaying one or more image sequences according to a preset rule, so that the user can obtain better visual experience. The dynamic image may be used to record a dynamic process in a scene in a time period before the user shoots an image, or may be used to record a dynamic process in a scene in a time period after the user shoots an image, or may be used to record a dynamic process in a scene in a time period before and after the user shoots an image.

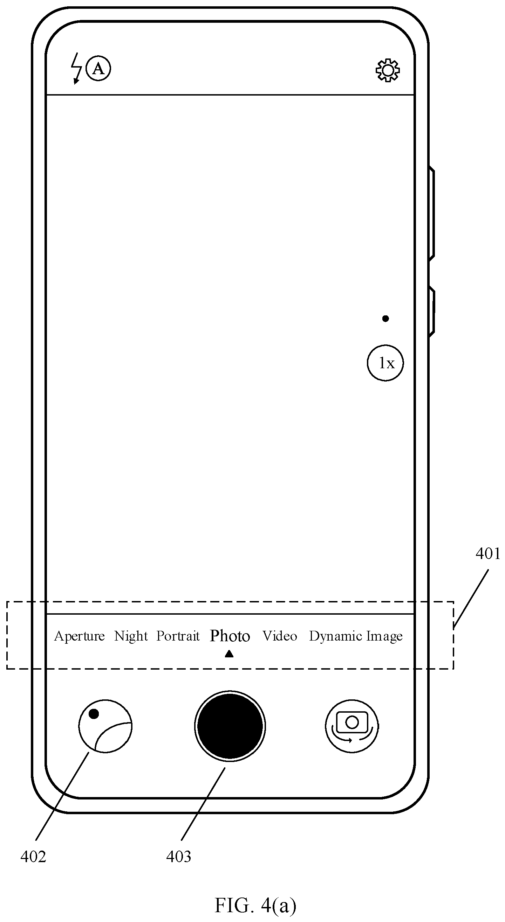

For example, the electronic device is a mobile phone. After the mobile phone starts a camera, a photographing interface shown in FIG. 4(a) may be displayed. The photographing interface shown in FIG. 4(a) is a photographing interface existing when the mobile phone is in a photo mode. The photographing interface of the mobile phone may include a switch bar 401, a display control 402 for a previously shot image, a shutter button control 403, and the like.

As shown in FIG. 4(a), the switch bar 401 may include a plurality of camera modes such as Aperture, Night, Portrait, Photo, Video, and Dynamic Image. Other modes that are not displayed in FIG. 4(a) are hidden, and the user may slide the switch bar leftward or rightward to show the hidden modes.

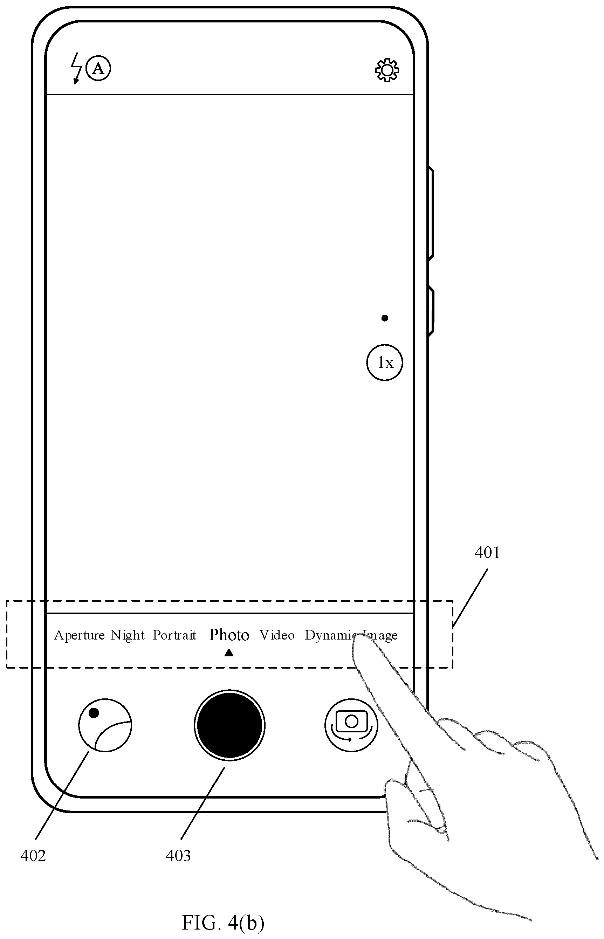

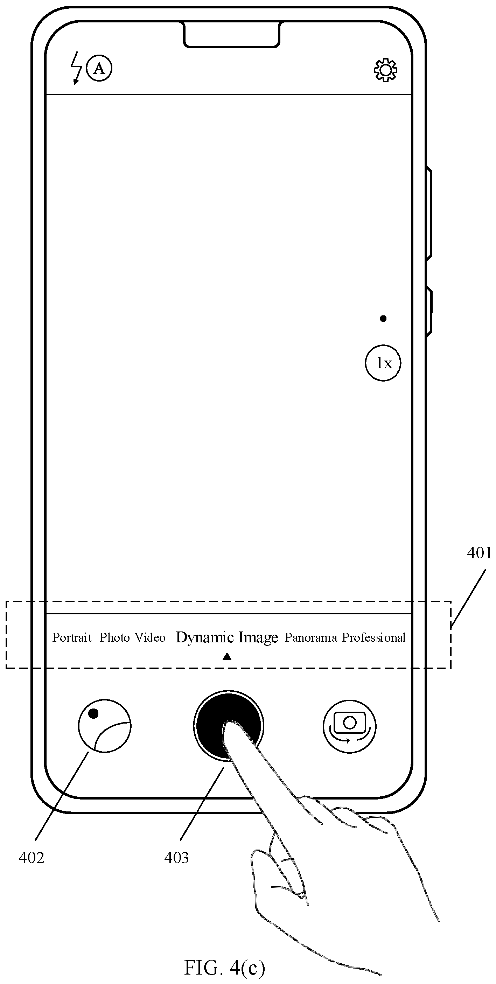

When the user wants to shoot a dynamic image, as shown in FIG. 4(b), the user may tap a dynamic image option in the switch bar 401, so that the mobile phone switches from the photo mode shown in FIG. 4(b) to a dynamic image mode shown in FIG. 4(c).

The mobile phone enters the dynamic image mode in response to the trigger operation of the user on the dynamic image option. As shown in FIG. 4(c), after the user taps the shutter button control 403, the mobile phone may shoot one frame of image by using a standard camera, and generate a dynamic image based on the image and event data that is in a time period near shooting time of the image and that is captured by an event camera. Optionally, both the frame of shot image and the generated dynamic image may be stored in a gallery.

Optionally, the display control 402 on the photographing interface may be used to display a thumbnail of the frame of shot image, or may be used to display a thumbnail of the generated dynamic image. Optionally, because the dynamic image is usually an image sequence including a plurality of frames of images, the mobile phone may select one frame of image from the plurality of frames of images as a cover image of the dynamic image. The display control 402 may display a thumbnail of the cover image of the dynamic image.

In the dynamic image mode, the event camera captures the event data in the time period near the shooting time of the frame of image. Therefore, the camera application may also support a highlight image generation function in the dynamic image mode. In other words, in the dynamic image mode, the camera application may not only generate the dynamic image by using the event data captured by the event camera, but also generate a highlight image by using the event data captured by the event camera. Optionally, when the camera application is in the dynamic image mode, the highlight image function may be automatically enabled, and the user does not need to manually trigger the highlight image function.

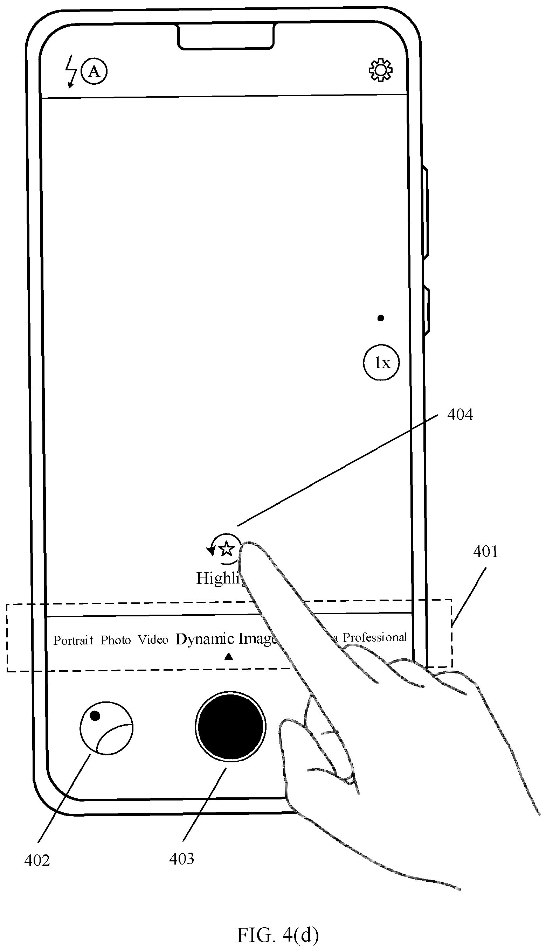

For example, the electronic device is a mobile phone. After starting a camera and entering a dynamic image mode, the mobile phone may display a photographing interface shown in FIG. 4(d). The photographing interface may include a highlight image control 404. When the user wants to shoot some highlight pictures that are difficult to capture, as shown in FIG. 4(d), the user may tap the highlight image control 404, so that the mobile phone enables the highlight image function. In this way, after the user taps the shutter button control 403, the mobile phone may shoot one frame of image by using a standard camera, and generate a dynamic image based on the image and event data that is in a time period near shooting time of the image and that is captured by an event camera. In addition, the mobile phone may further generate a highlight image according to the image processing method in embodiments of this application. Optionally, all of the frame of shot image, the generated dynamic image, and the highlight image may be stored in a gallery.

Optionally, the display control 402 on the photographing interface may be used to display a thumbnail of the frame of shot image, or may be used to display a thumbnail of the generated dynamic image, or may be used to display a thumbnail of the generated highlight image.

In some embodiments, when the camera application supports the dynamic image mode, the gallery application may also support the highlight image function. It may be understood that, because a single frame of image shot by the user and event data in a time period near shooting time of the single frame of image are recorded in the dynamic image mode, for an image that is shot in the dynamic image mode and that is stored in the gallery, after the highlight image function is enabled, the gallery application may generate a highlight image of the image according to the image processing method in embodiments of this application.

Optionally, for the image that is shot in the dynamic image mode and that is stored in the gallery, the gallery application may automatically enable the highlight image function. In other words, the gallery application may automatically generate the highlight image of the image according to the image processing method in embodiments of this application. Optionally, for the image that is shot in the dynamic image mode and that is stored in the gallery, the gallery application may provide a function of enabling and a function of disabling the highlight image function for the user to manually select whether to trigger the highlight image function for the image. After the user chooses to enable the highlight image function for the image, the gallery application may generate the highlight image of the image according to the image processing method in embodiments of this application.

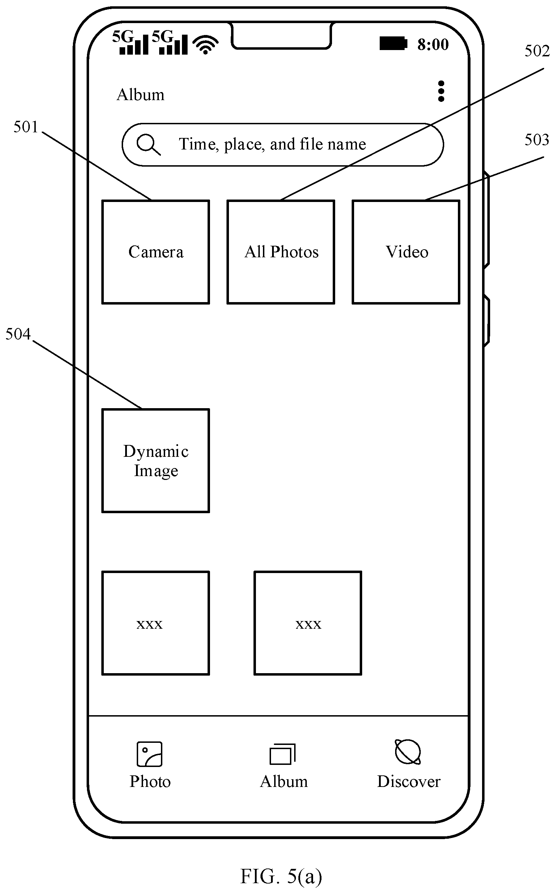

For example, the electronic device is a mobile phone. FIG. 5(a) is a diagram of an album display interface of a gallery. All photos and videos stored in the mobile phone are displayed on the album display interface in a form of folder. For example, the album display interface shown in FIG. 5(a) includes a camera folder 501, an all-photo folder 502, a video folder 503, and a dynamic image folder 504. Certainly, the album display interface may further include another folder. A folder displayed on the camera display interface is not limited in embodiments of this application.

The camera folder 501 may include all photos and videos shot by the mobile phone by using a camera, for example, an image shot in a dynamic image mode or an image shot in a portrait mode. The all-photo folder 502 may include all photos and videos stored in the mobile phone, for example, the photos and videos shot by the mobile phone by using the camera, and photos and videos downloaded by the mobile phone from a web page. The video folder 503 includes all the videos stored in the mobile phone. The dynamic image folder 504 includes all the images that are shot in the dynamic image mode and that are stored in the mobile phone.

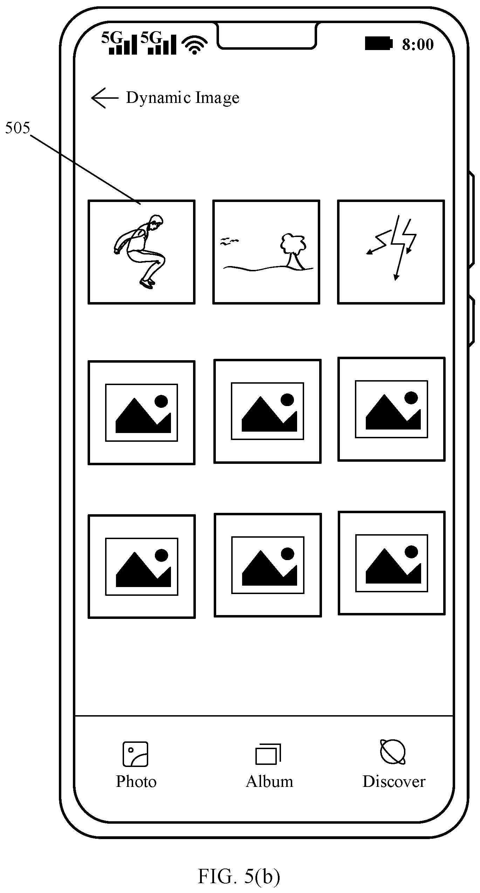

FIG. 5(b) is a diagram of a display interface of the dynamic image folder. Thumbnails of all the dynamic images shot by the mobile phone in the dynamic image mode are displayed on the display interface of the dynamic image folder. The thumbnail of the dynamic image may be a thumbnail of a cover image of the dynamic image.

For example, as shown in FIG. 5(b), a thumbnail of a cover image of a dynamic image 505 is displayed on the display interface of the dynamic image folder. The dynamic image 505 may be a dynamic image of a user jumping to a highest point in the air, and the cover image of the dynamic image 505 may be an image of the user squatting when the user starts to jump.

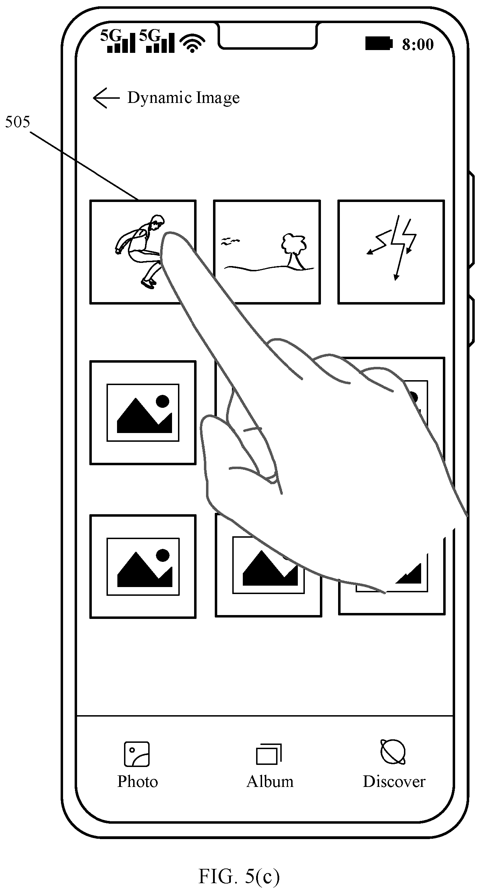

As shown in FIG. 5(c), when the user taps, on the display interface of the dynamic image folder, the thumbnail of the cover image of the dynamic image 505, the mobile phone may display a browsing interface for the dynamic image 505 on a display of the mobile phone in response to the tapping operation of the user.

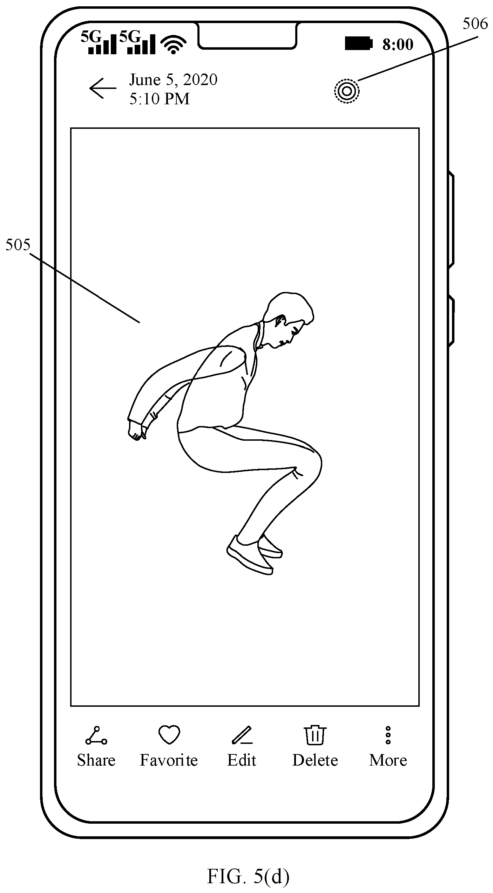

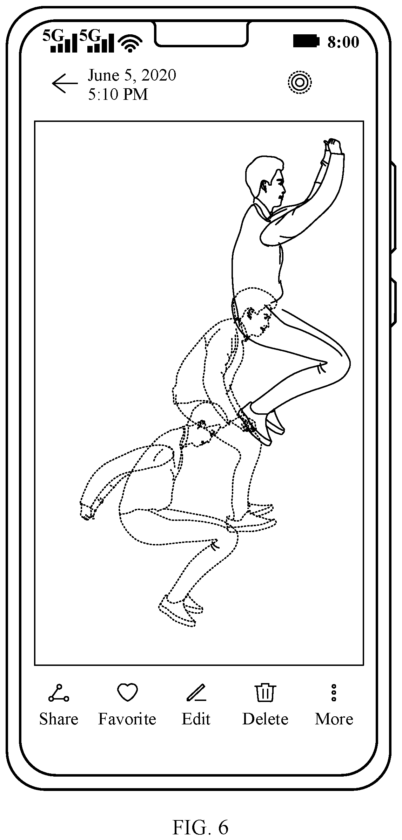

For example, the mobile phone may display the browsing interface for the dynamic image 505 shown in FIG. 5(d), and the browsing interface for the dynamic image 505 may include a playing control 506. The playing control 506 is used to play the dynamic image 505 with a dynamic effect, that is, switch and display, according to a preset rule, a plurality of frames of images that form the dynamic image 500, to generate the dynamic effect. For example, the dynamic effect of the dynamic image 505 may be shown in FIG. 6. The mobile phone displays a dynamic effect of a person jumping to a highest point in the air.

Optionally, the user may tap the playing control 506, so that the mobile phone plays the dynamic image 505 with the dynamic effect. Optionally, the user may alternatively press and hold the dynamic image 505, so that the mobile phone plays the dynamic image 505 with the dynamic effect.

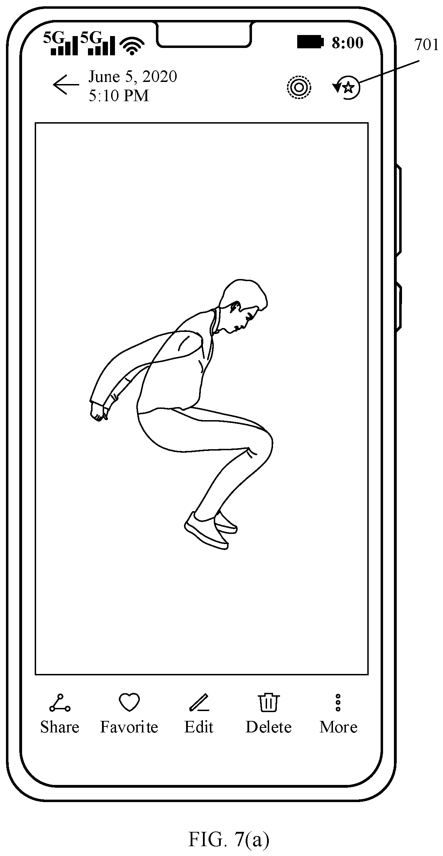

For example, the mobile phone may alternatively display the browsing interface for the dynamic image shown in FIG. 7(a), and the browsing interface for the dynamic image may include a highlight image control 701. The highlight image control 701 is used to generate a highlight image based on a dynamic image. In other words, the highlight image of the dynamic image is generated by using a single frame of image recorded by the dynamic image and event data in a time period near shooting time of the single frame of image.

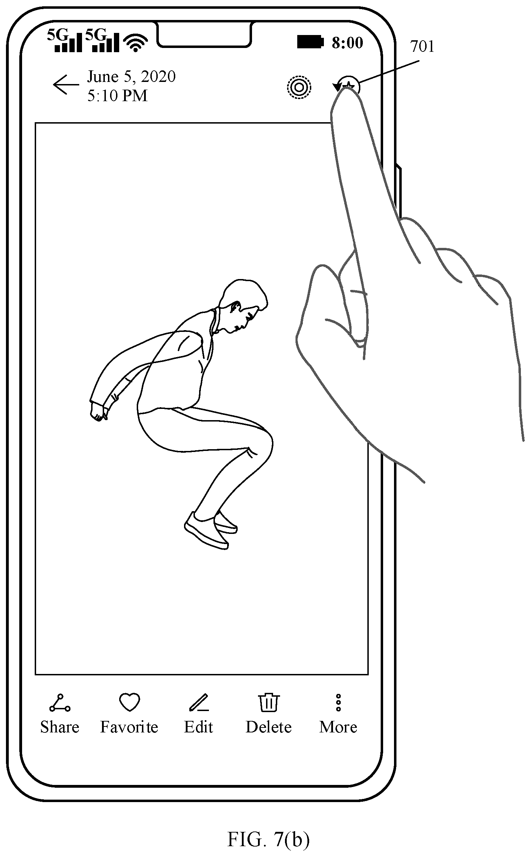

When the user wants to generate a highlight image of a dynamic image, as shown in FIG. 7(b), on the browsing interface for the dynamic image, the user may tap the highlight image control 701, so that the mobile phone enables a highlight image function for the dynamic image.

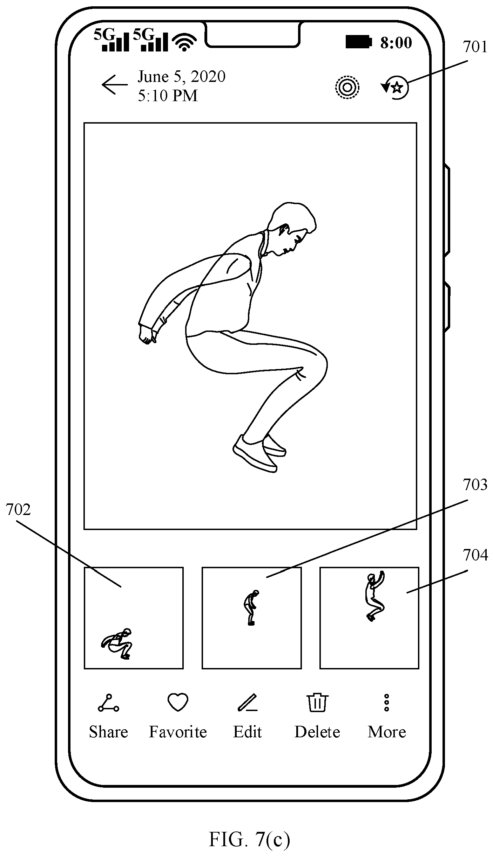

After the mobile phone enables the highlight image function for the dynamic image in response to the trigger operation of the user on the highlight image control 701, the mobile phone may display one or more frames of highlight images of the dynamic image. As shown in FIG. 7(c), the mobile phone may display a plurality of frames of highlight images of the dynamic image: a fixed-point image 702 obtained when the person starts to jump, a fixed-point image 703 obtained when the person jumps in mid-air, and a fixed-point image 704 obtained when the person jumps to a highest point.

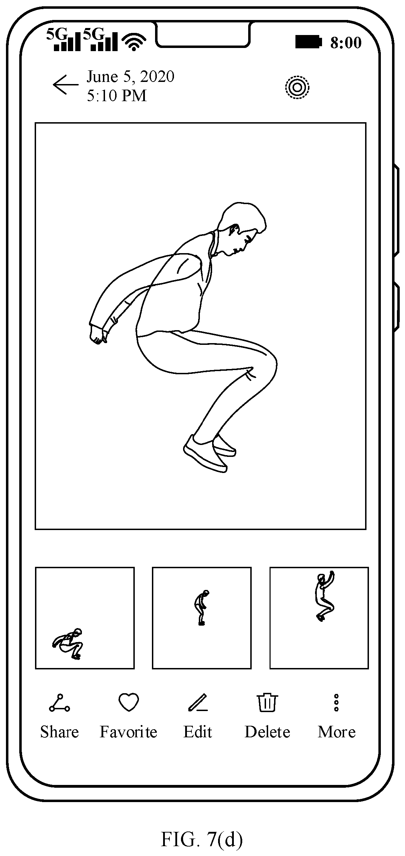

Optionally, the gallery application may automatically enable the highlight image function. The mobile phone may alternatively display the browsing interface for the dynamic image shown in FIG. 7(d). The browsing interface for the dynamic image does not include the highlight image control 701. When displaying the browsing interface for the dynamic image, the mobile phone automatically displays the one or more frames of highlight images of the dynamic image.

Optionally, when the highlight image is a highlight moment picture, the mobile phone may also generate a highlight video based on the highlight image. In an implementation, the mobile phone may combine the plurality of frames of highlight images to obtain the highlight video. In another implementation, the mobile phone may alternatively generate, based on the highlight image, a highlight video that includes a motion picture obtained near shooting time of the highlight image.

In some embodiments, when the mobile phone shoots the highlight image in a highlight image mode, the mobile phone may store the shot highlight image in the gallery, and the mobile phone may also store, in the gallery, the highlight video generated based on the highlight image, so that the user can query the highlight image and the highlight video by using the gallery application.

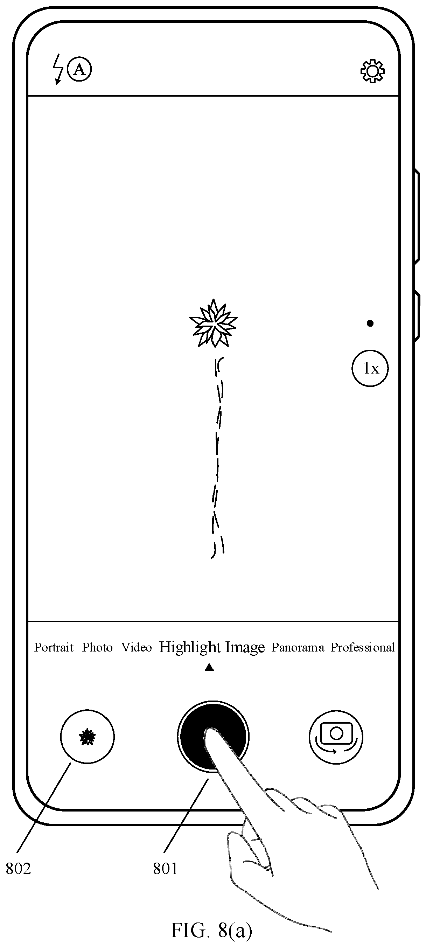

For example, refer to FIG. 8(a) to FIG. 8(d). A camera mode supported by a camera application includes a highlight image mode. When the user wants to shoot a highlight picture of blooming fireworks, as shown in FIG. 8(a), the user may select the highlight image mode, so that the mobile phone enters the highlight image mode. After the user focuses the mobile phone on a scene of the blooming fireworks and taps a shutter button control 801, the mobile phone may obtain one frame of image of the fireworks by using a standard camera, and the mobile phone may automatically generate a highlight image according to the image processing method in embodiments of this application.

A previously shot image may be displayed by a display control 802 on a photographing interface. Optionally, when the display control 802 on the photographing interface is used to display the frame of image of the fireworks shot by the standard camera, after the user taps the display control 802, the mobile phone displays a browsing interface for the image of the fireworks on a display of the mobile phone in response to the tapping operation of the user.

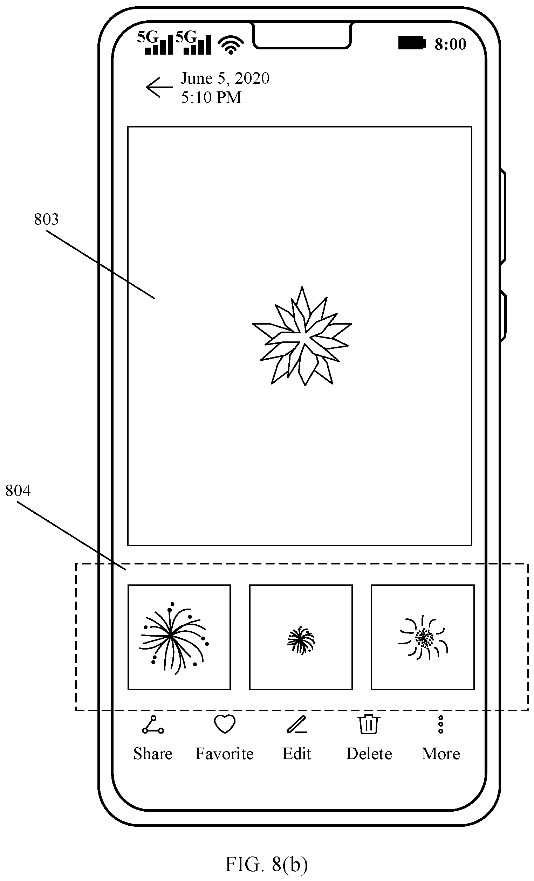

In an example, the browsing interface for the image of the fireworks may be shown in FIG. 8(b). The browsing interface may include the frame of image 803 of the fireworks shot by the standard camera and a highlight image 804 automatically generated by the mobile phone, for example, a fixed-point image of completely blooming fireworks, a fixed-point image of preliminarily blooming fireworks, and a fixed-point image of fireworks going off.

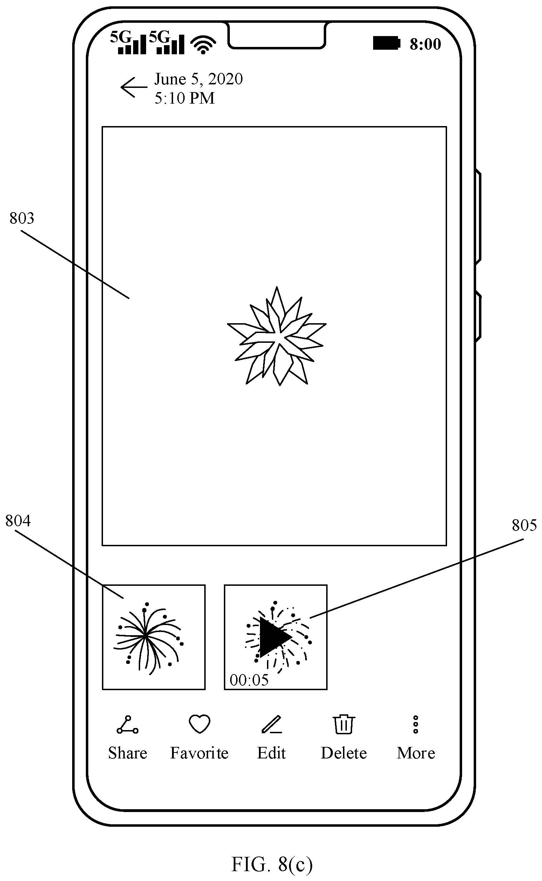

In another example, the browsing interface for the image of the fireworks may be shown in FIG. 8(c). The browsing interface may include one frame of image 803 of the fireworks shot by the standard camera and a highlight image 804 and a highlight video 805 that are automatically generated by the mobile phone, for example, a fixed-point image of completely blooming fireworks, a fixed-point image of preliminarily blooming fireworks, and a fixed-point image of fireworks going off.

Optionally, the user may alternatively query the shot image of the fireworks and the corresponding highlight image and highlight video by using the gallery application.

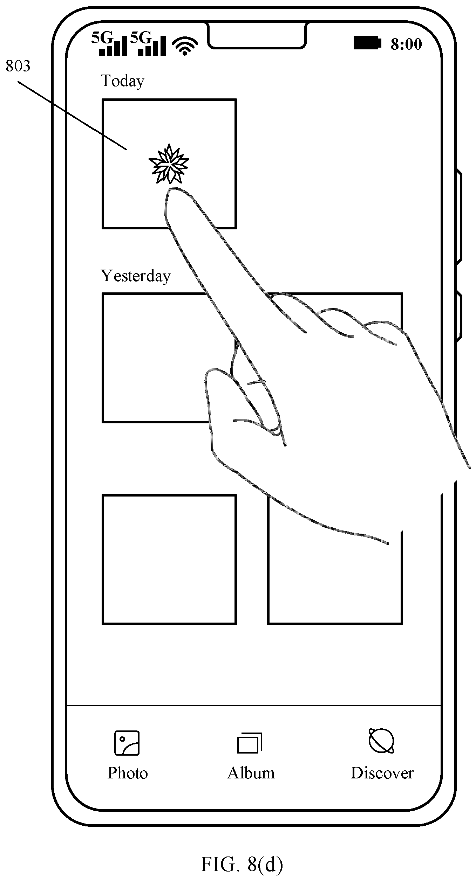

For example, FIG. 8(d) is a diagram of a photo display interface of the gallery. Thumbnails of all photos taken by the mobile phone by using the camera, for example, a thumbnail of the frame of image 803 of the fireworks just shot by the user, are displayed on the display interface. As shown in FIG. 8(b), after the user taps the thumbnail of the image 803 of the fireworks, the mobile phone displays, on the display of the mobile phone in response to the tapping operation of the user, the browsing interface for the image 803 of the fireworks shown in FIG. 8(b) or FIG. 8(c).

Similarly, when the mobile phone generates the highlight image based on the dynamic image, the mobile phone may store the generated highlight image in the gallery, and the mobile phone may also store, in the gallery, the highlight video generated based on the highlight image, so that the user can query the highlight image and the highlight video corresponding to the dynamic image by using the gallery application.

The dynamic image provided in this embodiment of this application may also support the highlight image function provided in this application. Therefore, the following first describes a generation method of the dynamic image with reference to the accompanying drawings.

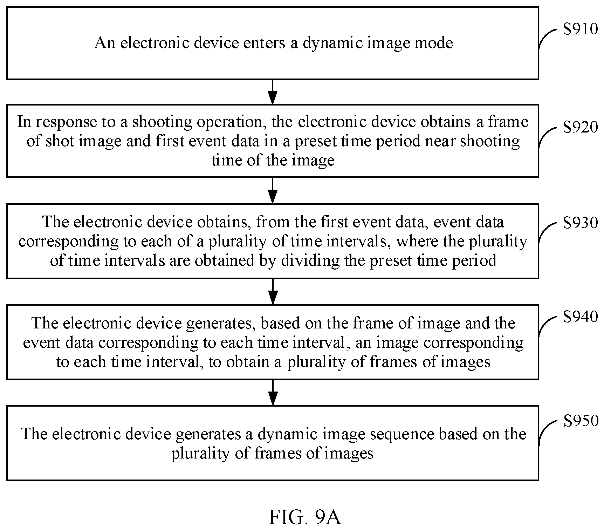

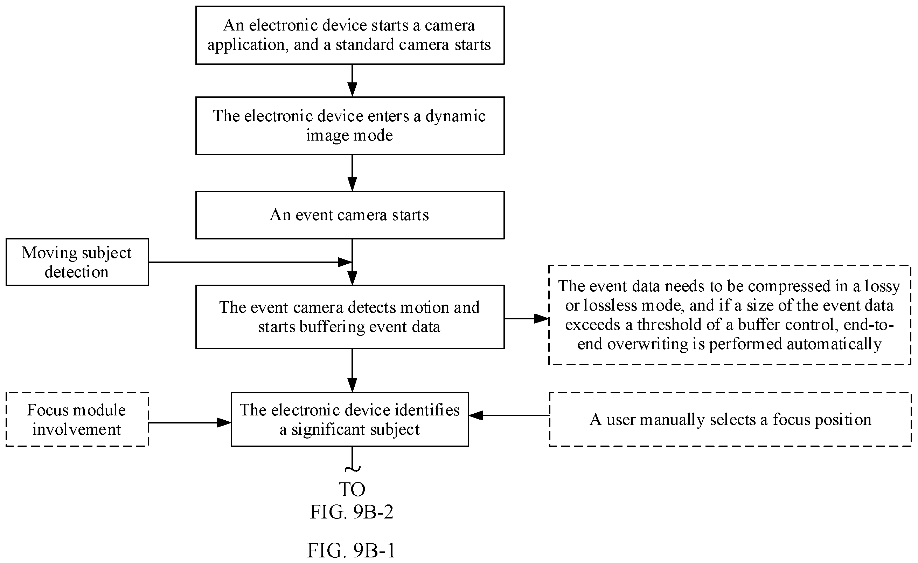

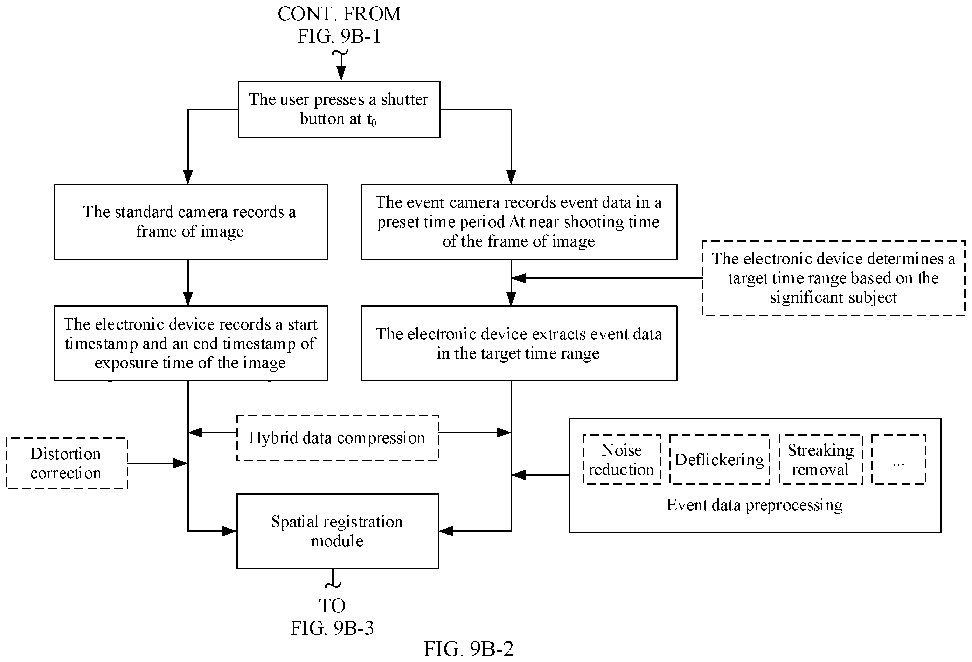

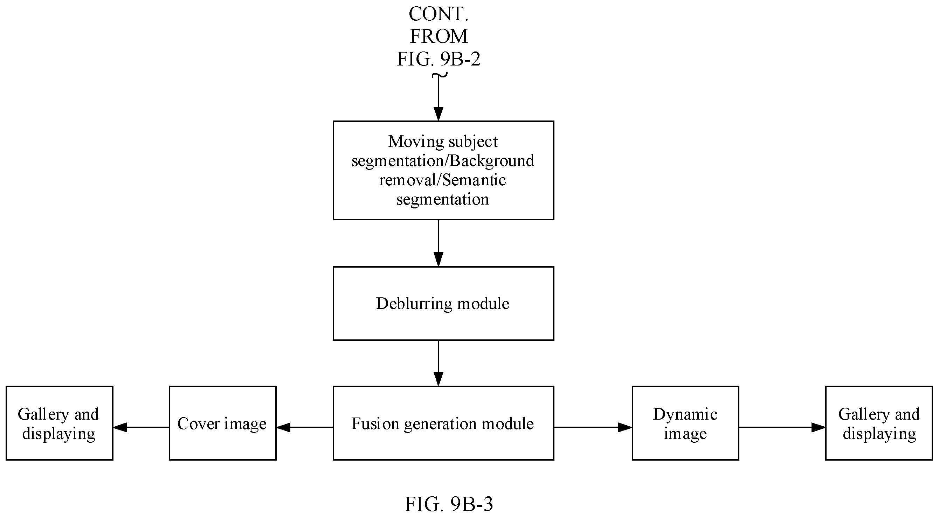

Refer to FIG. 9A to FIG. 9B-3. FIG. 9A is a schematic flowchart of an image processing method according to an embodiment of this application, and FIG. 9A to FIG. 9B-3are an overall schematic flowchart of an image processing method according to an embodiment of this application. The image processing method is applied to the foregoing electronic device 100, and may be used to generate the dynamic image. Optionally, the electronic device 100 may be the foregoing mobile phone. As shown in FIG. 9A to FIG. 9B-3, the image processing method may include the following steps.

S910: The electronic device enters a dynamic image mode.

The electronic device may include a camera application. The camera application may support a dynamic image mode.

In some embodiments, after the electronic device starts the camera application and detects an operation of triggering the dynamic image mode by a user, the electronic device may enter the dynamic image mode in response to the operation.

In some embodiments, when the camera application automatically supports a dynamic image function in a specified mode, the electronic device may alternatively enter the dynamic image mode automatically when detecting that the camera application enters the specified mode. Optionally, the specified mode may be a photo mode, a portrait mode, a night mode, or the like. This is not limited in this application.

In some embodiments, when the electronic device detects, in a third-party application, a request for shooting a dynamic image, the electronic device may alternatively invoke the camera application automatically and enter the dynamic image mode in response to the operation. A manner of entering the dynamic image mode by the electronic device is not limited in this application.

S920: In response to a shooting operation, the electronic device obtains one frame of shot image and first event data in a preset time period near shooting time of the image.

In this embodiment of this application, after the electronic device enters the dynamic image mode, the electronic device may obtain the frame of image captured by a standard camera, and may obtain the first event data that is in the preset time period near the shooting time of the image and that is captured by an event camera. The standard camera may capture a single frame of static image in a scene, and the event camera may capture event data that can reflect motion information in the scene.

In an implementation, after the electronic device detects an operation of starting the camera application by the user, the electronic device may simultaneously start the event camera and the standard camera, so that the event camera and the standard camera synchronously enter a working state, to capture event data and a static image in a scene.

After the electronic device starts the event camera, the event camera may perform moving object detection. Optionally, when the event camera captures the event data used to reflect the motion information in the scene, the electronic device may control the event camera to start to buffer the captured event data. Optionally, after the electronic device starts the event camera, the electronic device may alternatively control, when detecting that the electronic device enters the dynamic image mode, the event camera to start to buffer the captured event data. Optionally, after the electronic device starts the event camera and the electronic device enters the dynamic image mode, the electronic device may alternatively control, when detecting the shooting operation of the user, the event camera to start to buffer the captured event data. An event data buffering occasion of the event camera is not limited in embodiments of this application.

In another implementation, after the electronic device detects an operation of starting the camera application by the user, the electronic device may first start the standard camera, so that the standard camera first enters a working state to capture a static image in a scene. Optionally, the electronic device may start the event camera when detecting that an object moves in the scene, so that the event camera enters a working state to capture event data in the scene. Optionally, the electronic device may alternatively start the event camera when detecting that the electronic device enters the dynamic image mode, so that the event camera enters a working state to capture event data in the scene Optionally, after entering the dynamic image mode, the electronic device may alternatively start the event camera when detecting the shooting operation of the user, so that the event camera enters a working state to capture event data in the scene. A starting occasion of the event camera is not limited in embodiments of this application.

Optionally, the electronic device may buffer the event data through lossy or lossless compression, to ensure that more event data can be stored in buffer space. Optionally, when the electronic device detects that a size of buffered event data exceeds a preset buffer threshold, the electronic device may automatically perform end-to-end overwriting, that is, delete the event data buffered first in the buffer space and store the latest recorded event data in the buffer space. The preset buffer threshold may be properly set based on an actual application scenario. This is not limited in embodiments of this application.

In an embodiment of this application, after detecting the shooting operation of the user to indicate to perform photographing, in response to the shooting operation, the electronic device may complete shooting of the frame of image by using the standard camera, and complete capture of the event data in the preset time period near the shooting time of the image by using the event camera. In this way, the electronic device can obtain the frame of shot image and the first event data in the preset time period near the shooting time of the image. The shooting operation of the user to indicate to perform photographing may be in a plurality of forms.

Optionally, the shooting operation of the user to indicate to perform photographing may be an operation of pressing a shutter button by the user, or may be a voice indication of the user, or may be a gesture operation of the user. A form of the shooting operation of the user to indicate to perform photographing is not limited in embodiments of this application. The following describes the solution in embodiments of this application by using an example in which the shooting operation of the user to indicate to perform photographing is that the user presses the shutter button.

Generally, after the user presses the shutter button, the standard camera can complete image photographing. If press time of the shutter button is denoted as t₀, the electronic device records, by using the standard camera, one frame of static image corresponding to the press time t₀. Shooting time of the static image is the press time t₀. In addition, the electronic device also records, by using the event camera, first event data in a preset time period Δt near the press time t₀. The preset time period may be properly set based on an actual situation. This is not limited in embodiments of this application. For example, the preset time period may be 5 seconds (s), or may be 10s.

Optionally, the first event data may be event data in the preset time period Δt before the shooting time of the frame of image. For example, as shown in FIG. 10, if the shooting time of the frame of image is t₀, the electronic device may obtain, as the first event data, event data captured by the event camera in a time period [t₀-Δt, t₀]. In other words, the event camera may record motion information in the scene in the time period before the image is shot.

Optionally, the first event data may alternatively be event data in the preset time period Δt after the shooting time of the frame of image. For example, as shown in FIG. 11, if the shooting time of the frame of image is t₀, the electronic device may obtain event data captured by the event camera in a time period [t₀, t₀+Δt]. In other words, the event camera may collect motion information in the scene in the time period after the image is shot. It may be understood that, because the event camera needs to capture the event data in the time period after the image is shot, the user needs to keep still for a time period after pressing the shutter button.

Optionally, the first event data may alternatively be event data in the preset time period Δt before and after the shooting time of the frame of image. For example, as shown in FIG. 12, if the shooting time of the frame of image is t₀, the electronic device may obtain event data captured by the event camera in time periods [t₁, t₀] and [t₀, t₂]. A time difference between t₂ and t₁ is Δt. In other words, the event camera may collect motion information in the scene in the time period before and after the image is shot.

In an implementation, duration of [t₁, t₀] and duration of [t₀, t₂] may be the same. In other words, the electronic device may obtain event data captured by the event camera in time periods [t₀-Δt/2, t₀] and [t₀, t₀+Δt/2]. In an implementation, duration of [t₁, t₀] and duration of [t₀, t₂] may alternatively be different. This is not limited in embodiments of this application.

It may be understood that the event camera may record dynamic information of all moving objects in the scene. When the user needs to shoot one frame of image in the scene, if there are a plurality of moving objects in the scene, there are usually one or more moving objects that the user wants to photograph most and that the user is most interested in the scene. The one or more moving objects are significant subjects in the scene. In other words, dynamic information of the significant subject recorded by the event camera is likely to be desired by the user.

In this way, in some embodiments, after obtaining the frame of shot image and the first event data in the preset time period near the shooting time of the image, the electronic device can delete, from the first event data based on the significant subject in the scene, event data unrelated to the significant subject, so that the electronic device can obtain the first event data related to the significant subject. For example, in the first event data that is within 5s near the shooting time of the image and that is buffered by the event camera, when event data within 2s does not include motion information of the significant subject, the electronic device may delete the event data within the 2s, and store and record only event data within the remaining 3s as the first event data.

Optionally, when the electronic device shoots the frame of image by using the standard camera, the electronic device may first identify the significant subject in the photographing scene, and then control the standard camera to focus on the significant subject before completing photographing. The significant subject may be a movable person or object, or may be a face, a landmark building, or the like. This is not limited in this application. The electronic device may identify the significant subject in a plurality of manners.

In a manner, the electronic device may determine, based on a focus position manually selected by the user, a person or an object in the focus position as the significant subject in the photographing scene. In another manner, the electronic device may determine a moving object with a maximum motion amplitude in the scene as the significant subject in the photographing scene. In still another manner, the electronic device may determine a moving object in a center of the photographing scene as the significant subject in the photographing scene. A manner of identifying the significant subject by the electronic device is not limited in this application.

Optionally, after obtaining the frame of shot image and the first event data in the preset time period near the shooting time of the image, the electronic device may determine, based on the significant subject, a target time range of event data related to the significant subject. Then, the electronic device may extract, from the first event data, the event data in the target time range as valid first event data to generate a subsequent dynamic image. In this way, in this application, the event camera can be used to record complete motion information of the significant subject in the data collection time range, thereby implementing segmented recording of the moving objects in the scene.

S930: The electronic device obtains, from the first event data, event data corresponding to each of a plurality of time intervals, where the plurality of time intervals are obtained by dividing the preset time period.

In an embodiment of this application, after the electronic device obtains the frame of shot image and the first event data in the preset time period near the shooting time of the image, the electronic device may reconstruct a scene image at any moment in the preset time period by using the image and the first event data in the preset time period. In this way, the electronic device can obtain a real-scene image near the shooting time of the image.

Optionally, when the electronic device uses, as the valid first event data based on the significant subject in the scene, the event data that is in the target time range and that includes motion of the significant subject, the electronic device may alternatively reconstruct a scene image at any moment in the target time range by using the frame of image and the valid first event data.

In some embodiments, the electronic device may reconstruct a scene image at a plurality of moments in the preset time period according to a preset rule. Optionally, after the electronic device obtains the frame of shot image and the first event data in the preset time period near the shooting time of the image, the electronic device may divide the first event data, to obtain time data in different time periods.

In a manner, the electronic device may divide the preset time period into a plurality of time intervals, and then the electronic device may obtain, from the first event data, event data corresponding to each of the plurality of time intervals. The event data corresponding to each time interval may be used to reconstruct and generate one frame of image. Optionally, the electronic device may evenly divide the preset time period, to obtain a plurality of time intervals having a same time length.

Optionally, the electronic device may divide the preset time period based on density of the event data. For example, the electronic device may divide a time range of event data with higher density into a plurality of time intervals having shorter time lengths, so that the electronic device can reconstruct a large quantity of images in a time period in which motion frequently occurs; and divide a time range of event data with lower density into a plurality of time intervals having longer time lengths, so that the electronic device can generate a small quantity of images in a time period in which motion seldom occurs. In this way, division into the plurality of time intervals in the preset time period can be adaptively determined based on the density of the event data in the preset time period. In this way, the electronic device can adaptively adjust a frame rate of the reconstructed image based on a motion speed, so that a finally generated dynamic image is smoother.

It may be understood that, because the event data and the frame of image are data in different data forms, the electronic device can accurately reconstruct the scene image only after performing spatial registration on the frame of image and the event data. A method for spatial registration of the frame of image and the event data is not limited in embodiments of this application. For example, the electronic device may first perform coarse registration on the frame of image and the event data, and then perform fine registration on the frame of image and the event data.

In a manner, as shown in (a) in FIG. 13, the electronic device may perform contour calibration on the image and the event data based on exposure time of the frame of image, and then input the image and the event data to a homography matrix, to perform coarse registration on edge information. Then, data representation processing is performed on the coarsely registered event data to obtain an event frame, and edge information of a single frame of image is reconfirmed through edge extraction. Further, the electronic device may perform finer sub-pixel registration on the event frame and the single frame of image whose edge information is reconfirmed, to obtain registered mixed data. Because feature drift may occur during registration, the electronic device may further perform drift calibration. In this way, the electronic device can obtain spatially registered mixed data after performing distortion correction on calibrated mixed data. Optionally, as shown in (b) in FIG. 13, the electronic device may first perform distortion correction on the frame of image and the event data, and then perform spatial registration on the frame of image and the event data.

In another manner, as shown in (c) in FIG. 13, the electronic device may alternatively directly perform spatial registration on the frame of image and the event data by using a neural network. For example, the electronic device may convert the frame of image and the event data to be in a same data representation mode or similar data representation modes by using a mode conversion network, and then implement spatial registration of the frame of image and the event data by using a registration network.

In some embodiments, before performing spatial registration on the frame of image and the event data, the electronic device may preprocess the first event data, to obtain accurate event data. Preprocessing may be noise reduction, deflickering, streaking removal, or the like. This is not limited in this application.

In some embodiments, after performing spatial registration on the image and the first event data based on the exposure time of the frame of image to obtain the registered mixed data, the electronic device may input the mixed data including the first event data, the frame of image, and information about the exposure time of the image to a fusion generation algorithm, to divide, according to the algorithm, the first event data into event data corresponding to each of the plurality of time intervals, and reconstruct, based on the frame of image and the event data corresponding to each time interval, static images at different moments in the preset time period. These static images may reflect a dynamic process in a scene near the shooting time of the frame of image.

It may be understood that, when the user presses the shutter button, if the press time of the shutter button is denoted as t₀, the standard camera in the electronic device uses an integral within the exposure time T as the frame of image at the press time t₀. In some embodiments, as shown in FIG. 14, when the electronic device shoots the frame of image by using the standard camera, the electronic device may also record the exposure time T of the image. Optionally, the exposure time may include start and end timestamp information of the exposure time.

S940: The electronic device generates, based on the frame of image and the event data corresponding to each time interval, an image corresponding to each time interval, to obtain a plurality of frames of images.

In an embodiment of this application, the event camera records the event data in the preset time period near the shooting time of the frame of image, which is equivalent to recording the dynamic information in the photographing scene near the shooting time of the single frame of image. Therefore, the frame of static image is combined with the dynamic information included in the event data, to reconstruct and record a motion process in the scene in the preset time period according to the fusion generation algorithm, that is, generate an image sequence reflecting the motion process, to synthesize the dynamic image.

In some embodiments, after the electronic device divides the first event data into the event data corresponding to each of the plurality of time intervals, the electronic device may generate, according to the fusion generation algorithm based on the frame of image and the event data corresponding to each time interval, the image corresponding to each time interval, so that the electronic device can obtain the plurality of frames of images corresponding to the plurality of time intervals.

The fusion generation method is not limited in embodiments of this application, and may be a conventional mathematical or deep learning method. For example, as shown in FIG. 15, the electronic device may establish a pixel-wise intensity change model based on one frame of image and event data in a time period. Then, the electronic device may generate an intensity image at any moment by using the intensity change model, and may generate a plurality of frames of images in combination with a color migration module to form an image sequence. The intensity change module may be obtained through polynomial fitting, threshold correction, and prediction model training. This is not limited in embodiments of this application.

In some embodiments, after obtaining the plurality of frames of images, the electronic device may also perform image processing on the plurality of frames of images, to obtain a plurality of frames of images that can clearly reflect the motion information of the significant subject in the images. Image processing may be moving subject segmentation, background removal, semantic segmentation, or the like. This is not limited in embodiments of this application.

S950: The electronic device generates a dynamic image sequence based on the plurality of frames of images.

In an embodiment of this application, after the electronic device reconstructs the plurality of frames of images based on the frame of static image and the event data in the time period, the electronic device may generate the dynamic image sequence based on the plurality of frames of images. The dynamic image sequence may be used to present the motion process in a scene in the frame of image in the preset time period. Optionally, the electronic device may splice the frame of shot image and the plurality of frames of images generated through reconstruction, to generate the dynamic image sequence.

In some embodiments, the electronic device may sort the plurality of frames of images in a time sequence based on time corresponding to the plurality of frames of images, to obtain a dynamic image sequence that complies with a real time rule.

In some embodiments, when the electronic device generates, based on the significant subject in the scene, the dynamic image by using, as the valid first event data, the event data that is in the target time range and that includes the motion of the significant subject, the generated dynamic image may be used to present a motion process of the significant subject in the frame of image in the preset time period.

In some embodiments, after generating the dynamic image sequence, the electronic device may synthesize the dynamic image based on the dynamic image sequence. Optionally, the electronic device may generate a cover image when generating the dynamic image. The cover image may be the first frame of image in the dynamic image sequence by default, or may be an image that is in the dynamic image sequence and that is intelligently recommended by the electronic device or that is selected by the user. A manner of determining the cover image is not limited in this application. For example, the electronic device may alternatively use one frame of image shot by the standard camera as the cover image of the dynamic image.

In some embodiments, after the electronic device generates the dynamic image, the electronic device may store the dynamic image to a gallery, and the user may view an effect of the shot dynamic image by using a gallery application. Optionally, the gallery application may display the cover image of the dynamic image. When the user presses and holds the cover image, the electronic device may play the dynamic effect of the dynamic image on a display.

In some embodiments, when the user presses the shutter button, the electronic device may alternatively display the dynamic image on the display after generating the dynamic image based on the frame of image shot by the standard camera, so that the user directly previews the effect of the shot dynamic image. Optionally, the electronic device may alternatively display, on the display, the frame of image shot by the standard camera. When the user presses and holds the image, the electronic device may play the dynamic effect of the dynamic image on the display.

In some embodiments, after generating the dynamic image, the electronic device may further process the dynamic image. For example, the electronic device may perform slow-motion playing processing, super-slow-motion playing processing, or the like on the dynamic image. Optionally, slow-motion playing processing may be reconstructing more image frames, so that 960 frames of images are output per second, to implement slow-motion playing processing. Optionally, because super slow motion requires more image frames than those required by slow motion, after performing slow-motion playing processing on the dynamic image, the electronic device may generate more image frames through video interpolation, to implement a visual effect of super slow motion of the dynamic image. For another example, the electronic device may alternatively superimpose one or more frames in the dynamic image sequence, so that the electronic device can generate a funny image. The user can view some pictures with an amusing effect in the dynamic image.

In some embodiments, the electronic device may also display the event data recorded in the dynamic image, or may display the event data recorded in the dynamic image and the frame of image in a superimposed manner. Therefore, the user can view motion change information in the dynamic image.

It may be understood that, when the electronic device shoots an image by using the standard camera, the standard camera uses an integral within exposure time as a static image at a moment. If the standard camera needs to record a continuous dynamic change process through photographing, the standard camera needs a high capture frame rate, resulting in high power consumption and high memory consumption of the electronic device. However, the event camera responds to a change of light intensity and excites positive or negative signals based on a comparison between an increase or a decrease of the light intensity and a threshold, and temporal resolution may reach 1 microsecond. Therefore, the event camera can record the dynamic change process in the scene. In this application, the standard camera and the event camera are combined to simultaneously record one frame of static image in a time range and a dynamic change process in the time range, so that a complete motion process is recorded at minimum memory costs and minimum power consumption. Static scene motion information and motion data are combined to generate recorded static images at different moments in the time range. Then, the electronic device may synthesize a required dynamic image based on a captured single frame of static image and the generated static images at different moments.

Currently, to obtain a dynamic image, in an implementation, the electronic device may use, as a corresponding dynamic image, a video obtained by synthesizing a group of shot image sequences, and use one frame of the dynamic image as a playing switch for starting the video. For example, after the user enables the dynamic image mode of the electronic device, the user taps a photographing button, and the electronic device starts to shoot a group of image sequences in a short time period. When photographing duration exceeds preset duration or the user taps the photographing button again, the electronic device ends photographing, to obtain the dynamic image. The electronic device may select one frame of image (usually the first frame) from the group of shot image sequences as a cover frame of the dynamic image. Then, the user may play the video corresponding to the dynamic image by pressing and holding the stored dynamic image. However, in this implementation, the electronic device needs to shoot and buffer a plurality of frames of color images, namely, three-channel RGB image sequences, which causes large memory space occupied and high power consumption of the electronic device. Especially for an electronic device of a mobile terminal type, for example, a mobile phone or a tablet, when the electronic device with limited battery power is brought outside, high battery energy is consumed in such an implementation in which dynamic images are shot and recorded a plurality of times.

In another implementation, the electronic device may shoot a single frame of image, and then input the single frame of image to a pre-trained neural network, to generate a group of image sequences according to a deep learning method, and then synthesize a dynamic image. In this way, a neural network model is used to learn motion forms in some dynamic scenes that comply with a specific physical rule, and finally, the user needs to shoot only a single frame of static image to generate the dynamic image. However, this implementation can be applied to only some dynamic scenes that comply with a same physical rule, for example, dynamic scenes in a fixed motion mode like river flowing, waterfall dropping, and spark splashing. For a dynamic process that does not comply with the motion rule, because an accurate motion process cannot be estimated, a good result cannot be obtained.

In still another implementation, the electronic device may shoot a small quantity of image sequences, and generate an intermediate frame according to a video interpolation algorithm, to obtain an image sequence including more frames of images. Then, the electronic device combines the frames of images into a dynamic image. Although this implementation can reduce memory space occupation of the electronic device, a real motion track of an object cannot be estimated through inter-frame interpolation. For example, for non-linear motion or non-rigid motion, accuracy of an inter-frame interpolation result cannot be ensured. However, if estimation on inter-frame motion is not accurate, the dynamic image may be blurred or ghosted, which affects authenticity of the dynamic image.

However, the dynamic image generation manner provided in this application is not limited to a fixed motion mode, and there is no need to occupy large storage space. Therefore, power consumption is low, and a battery life of the device is prolonged. This improves use experience.

According to the image processing method provided in embodiments of this application, the electronic device can generate a real image sequence by using one frame of image and real motion information in a time period near shooting time of the image, to synthesize a real dynamic image. In addition, because the event camera is characterized by high resolution, low delay, a high dynamic range, and low power consumption, memory occupation and power consumption of the electronic device can be reduced, and blurring of the synthesized dynamic image can be reduced. This improves user experience.

A highlight image provided in this embodiment of this application depends on the frame of image shot by the standard camera and the first event data in the preset time period near the shooting time of the image. Therefore, after entering a highlight image mode in the camera application, the electronic device may generate the highlight image by using the frame of image shot by the standard camera in real time and the first event data in the preset time period near the shooting time of the image. Alternatively, after obtaining the dynamic image in the foregoing dynamic image generation manner, the electronic device may generate, by using the frame of image recorded in the dynamic image and the first event data in the preset time period near the shooting time of the image, the highlight image corresponding to the dynamic image. This is not limited in this application.

With reference to the accompanying drawings, the following describes an image processing method according to an embodiment of this application. An electronic device reconstructs, based on one frame of shot image and event data in a time period near shooting time of the image, a highlight motion picture that is of a moving subject in the image and that appears in the time period near the shooting time of the image, namely, a highlight image.

FIG. 16 is a schematic flowchart of an image processing method according to an embodiment of this application. The method is used to generate a highlight image based on a highlight track of a target subject. The image processing method may be applied to the foregoing electronic device 100. Optionally, the electronic device 100 may be the foregoing mobile phone. As shown in FIG. 16, the image processing method may include the following steps.

S1610: The electronic device obtains one frame of shot image and first event data in a preset time period near shooting time of the image.

In some embodiments, when the electronic device stores a dynamic image shot in a dynamic image mode, the electronic device may obtain, based on the dynamic image, one frame of image shot by a standard camera and first event data in a preset time period near shooting time of the image.

Optionally, the electronic device includes a gallery application, and the gallery application may store the dynamic image shot in the dynamic image mode. The gallery application supports a highlight image function for the dynamic image.

In a manner, after the electronic device starts the gallery application and detects that the user enables the highlight image function for the dynamic image, the electronic device may generate a highlight image of the dynamic image according to the image processing method in this embodiment of this application in response to the operation. The electronic device may first obtain the frame of image recorded in the dynamic image and the first event data in the preset time period near the shooting time of the image.

In another manner, the gallery application may automatically support the highlight image function for the dynamic image. After detecting that a user triggers a browsing interface for the dynamic image, the electronic device may automatically generate a highlight image of the dynamic image according to the image processing method in this embodiment of this application in response to the operation. The electronic device may first obtain the frame of image recorded in the dynamic image and the first event data in the preset time period near the shooting time of the image.

In some embodiments, a camera application may support the highlight image mode. Optionally, after the electronic device starts the camera application and detects an operation of triggering the highlight image mode by the user, the electronic device may enter the highlight image mode in response to the operation.

In some embodiments, when the camera application automatically supports the highlight image function in a specified mode, the electronic device may alternatively enter the highlight image mode automatically when detecting that the camera application enters the specified mode. Optionally, the specified mode may be a photo mode, a portrait mode, a night mode, a dynamic image mode, or the like. This is not limited in this application.

After the electronic device enters the highlight image mode, the electronic device may obtain the frame of image captured by the standard camera, and may obtain the first event data that is in the preset time period near the shooting time of the image and that is captured by an event camera.

Optionally, after the electronic device detects an operation of starting the camera application by the user, the electronic device may first start the standard camera, so that the standard camera first enters a working state to capture a static image in a scene. Then, when detecting that the electronic device enters the highlight image mode, the electronic device starts the event camera, so that the event camera enters a working state to capture event data in the scene. Optionally, after entering the highlight image mode, the electronic device may alternatively start the event camera when detecting a shooting operation of the user, so that the event camera enters a working state to capture event data in the scene. A starting occasion of the event camera is not limited in embodiments of this application.

It may be understood that, when the user wants to shoot some highlight pictures that are difficult to capture, the user may trigger the highlight image mode of the camera application. When the camera application is in the highlight image mode, if the user presses a shutter button, the electronic device may capture the frame of image by using the standard camera, and may capture the first event data in the preset time period near the shooting time of the image by using the event camera. For a description of the first event data, refer to the foregoing embodiments. Details are not described herein again.

S1620: The electronic device generates a motion track of a target subject in the frame of image in the preset time period based on the frame of image and the first event data.

Because the event data recorded by the event camera can reflect motion information of a moving object in the scene, the electronic device may generate the motion track of the target subject in the frame of image in the preset time period based on the frame of image and the first event data. The target subject may be the moving object in the frame of image. When the image includes a plurality of moving objects, the target subject may alternatively be a significant subject in the frame of image.

In some embodiments, the electronic device may generate height information of the target subject in the image at any moment in the preset time period based on the frame of image and the first event data. A height change of the target subject in the preset time period is the motion track of the target subject in the preset time period.

In some implementations, after generating the motion track of the target subject in the frame of image in the preset time period, the electronic device may further display the motion track on a display.

For example, if the standard camera shoots one frame of image in a time period from a moment when a person starts to jump to a moment when the person jumps to a highest point in the air and then to a moment when the person falls from the air, the electronic device may use the image and first event data in a preset time period near shooting time of the image, a motion track that is of the person in the image and that is in the time period. As shown in FIG. 17, the electronic device may display a motion track 1701 on the display.

S 1630: The electronic device determines a highlight track in the motion track.

In an embodiment of this application, after obtaining the motion track of the target subject in the image in the preset time period, the electronic device may determine, from the motion track, the highlight track that the user is interested in.

In some embodiments, the electronic device may determine the highlight track in the motion track based on a highlight track point in the motion track. In an implementation, the electronic device may automatically identify a specified track point in the motion track, to determine the highlight track point in the motion track based on the specified track point. The specified track point may include at least one of a highest track point, a lowest track point, an intermediate track point, a start track point, an end track point, and a track mutation point.

For example, when the user shoots an image in a scene in a time period from a moment when a person starts to jump to a moment when the person jumps to a highest point in the air and then to a moment when the person falls from the air, an image that the user is usually interested in and wants to shoot is a fixed-point highlight image in which the person is at the highest point in the air. However, because such a highlight image is difficult to capture, the user is generally not satisfied with the shot image. In an embodiment of this application, the electronic device may reconstruct, by using the frame of image shot by the user and event data that is in a time period near shooting time of the image and that is captured by the event camera, a motion track of the person in the image in the time period from the moment when the person starts to jump to the moment when the person jumps to the highest point in the air and then to the moment when the person falls from the air, for example, the motion track 1701 shown in FIG. 17. Then, the electronic device may automatically identify a highest track point in the motion track, for example, a highest track point 1702 shown in FIG. 17. In this way, the fixed-point highlight image of the person at the highest point in the air that is desired by the user can be generated based on event data of the highest track point.

Optionally, when the user wants to capture highlight images of expressions presented when the person starts to jump and when the person falls on the ground, the electronic device may alternatively identify a lowest track point in the motion track automatically, to generate, based on event data of the lowest track point, the highlight images of the expressions presented when the person starts to jump and when the person falls on the ground that are desired by the user.

For example, when the user wants to shoot a picture of a bullet in a gun flying out of a muzzle, because a speed of the bullet is too high, an image shot is usually not a highlight moment picture desired by the user. In an embodiment of this application, the electronic device may reconstruct, by using one frame of image shot by the user and event data that is in a time period near shooting time of the image and that is captured by the event camera, a motion track of the bullet in the image in a time period from a moment when the bullet flies out of the muzzle to a moment when the bullet is in the air and then to a moment when the bullet reaches a shooting target, for example, a motion track 1801 shown in FIG. 18. Then, the electronic device may automatically identify a track mutation point in the motion track, for example, a track mutation point 1802 shown in FIG. 18. In this way, the highlight moment image of the bullet flying out of the muzzle that is desired by the user can be generated based on event data of the track mutation point.

In an implementation, the electronic device may also display a specified track point in the motion track. For example, the highest track point 1702 shown in FIG. 17 and the track mutation point 1802 shown in FIG. 18. Optionally, the electronic device may also provide a function of selecting a specified track point, so that the user may select a track point of interest, to generate a highlight image.

For example, as shown in FIG. 19, when the electronic device displays, on the display, a motion track 1901 of a person in a time period from a moment when the person starts to jump to a moment when the person jumps to a highest point in the air and then to a moment when the person falls from the air, the electronic device may also identify and display a specified track point in the motion track 1901. As shown in FIG. 19, when the user selects a first track point 1902 by using a finger, the electronic device may obtain the first track point as a highlight track point in the motion track in response to the selection operation on the first track point 1902 in the specified track point.

In an implementation, when the electronic device displays the motion track, the user may randomly select, from the motion track, a second track point of interest, to generate a highlight image. In this way, the electronic device obtains the second track point as a highlight track point in the motion track in response to the selection operation of the user on the second track point in the motion track.

Optionally, the electronic device may extract a track segment near the highlight track point and use the track segment as a highlight track in the motion track, to generate a highlight image. In other words, the highlight track may include the highlight track point and a non-highlight track point near the highlight track point. In this way, the electronic device can generate the highlight image that includes a motion process before and after the highlight track point.

Optionally, the electronic device may alternatively directly use the highlight track point as the highlight track in the motion track, to generate a highlight image. In this way, the electronic device can generate a highlight moment image corresponding to the highlight track point.

In some embodiments, the electronic device may alternatively use a complete motion track of the target subject in the preset time period as the highlight track. In this way, the electronic device can generate a motion video of the target subject in the preset time period.

Optionally, the user may alternatively manually select a track range of interest in the motion track as the highlight track, to generate a highlight image.

S1640: The electronic device obtains, from the first event data, second event data corresponding to the highlight track.

In an embodiment of this application, after determining the highlight track in the motion track, the electronic device may generate the highlight image corresponding to the highlight track. Optionally, the electronic device may select, from the first event data, the second event data corresponding to the highlight track, to reconstruct a real-scene image presented when the highlight track is generated.

The motion track generated by the electronic device may reflect height information of the target subject in the image at any moment. Therefore, the electronic device may obtain, from the first event data based on the time information corresponding to the highlight track, event data that matches the time information, namely, the second event data corresponding to the highlight track.

S1650: The electronic device generates, based on the frame of image and the second event data, the highlight image corresponding to the highlight track.

After obtaining the second event data corresponding to the highlight track, the electronic device may reconstruct, based on the frame of image shot by the standard camera and the second event data, a scene image corresponding to the highlight track. The reconstructed scene image is the highlight image corresponding to the highlight track.

It may be understood that, because a dynamic process corresponding to the highlight track is recorded in the second event data, the electronic device combines one frame of static image with dynamic information included in the event data, to reconstruct, according to a fusion generation algorithm, a highlight motion picture that corresponds to the target subject in the image and that presents when the highlight track is generated. For a manner of reconstructing the real-scene image by the electronic device at any moment in the time period by using the frame of image and the event data in the time period, refer to the foregoing manner of generating a plurality of frames of images in a dynamic image. Details are not described herein again.

In some embodiments, when the electronic device reconstructs, based on the frame of image recorded in the dynamic image and the first event data, the highlight image corresponding to the highlight track of the target subject in the frame of image, the electronic device may also generate a cover image of the dynamic image based on the highlight image. Optionally, when the highlight image is one frame of image, the electronic device may use the highlight image as the cover image of the dynamic image. Optionally, when there are a plurality of frames of highlight images, the electronic device may select any one of the highlight images as the cover image of the dynamic image.

In some embodiments, the electronic device may further determine, based on density of the second event data, a quantity of frames of highlight images to be generated. Optionally, higher density of the second event data indicates that a larger quantity of frames of highlight images may be generated. For example, at an instant moment when a speed is very high, for example, at a moment of bullet shooting or lightning, event data captured by the electronic device by using the event camera is very dense. In this case, the electronic device may increase a quantity of frames of highlight images to be generated, so that a frame rate of the highlight image can reach 960 fps. In this way, the user can browse more delicate and clear highlight pictures. The frame rate may be understood as a quantity of image frames included per second.

According to the image processing method provided in this embodiment of this application, the electronic device may generate the motion track of the target subject in the image by using the frame of image and the real motion information in the time period near the shooting time of the image, and then the electronic device may generate, based on the event data corresponding to the highlight track that is in the motion track and that is of interest of the user, the highlight picture corresponding to the highlight track. In this way, when the user shoots some memorable highlight pictures in the highlight image mode of the camera application, even if no highlight picture is captured in the image shot by the user, the electronic device can generate the highlight picture based on the image currently shot by the user. This improves user experience. **In** addition, when the user shoots a dynamic image in the dynamic image mode of the camera application, the electronic device can also generate a highlight image of the dynamic image based on the dynamic image currently shot by the user.

FIG. 20 is a schematic flowchart of another image processing method according to an embodiment of this application. The method is used to generate a highlight image based on highlight time of a target subject. As shown in FIG. 20, the image processing method may include the following steps.

S2010: An electronic device obtains one frame of shot image and first event data in a preset time period near shooting time of the image.

S2020: The electronic device generates a motion track of a target subject in the frame of image in the preset time period based on the frame of image and the first event data.

S2030: The electronic device generates a motion timeline of the target subject in the preset time period based on the motion track.

The motion track generated by the electronic device may reflect height information of the target subject in the image at any moment. Therefore, the electronic device may generate the motion timeline of the target subject in the preset time period based on the motion track of the target subject in the frame of image in the preset time period. It may be understood that a plurality of moments on the motion timeline are in a one-to-one correspondence with a plurality of track points in the motion track.

In some embodiments, the electronic device may display the motion timeline. In this way, a user can determine a motion time range of the target subject in the image by using the motion timeline. Optionally, the electronic device may also provide a function of selecting a motion timeline. When the user needs to learn a track height of the target subject at a moment, the user may select, from the motion timeline, a moment to be learned, and the electronic device may determine, from the motion track, a track point corresponding to the moment and display the track point.

For example, as shown in FIG. 21, the electronic device may display a motion track 2101 of the target subject in the preset time period on a display, and may also display a motion timeline 2102 of the target subject in the preset time period on the display. When the user selects a moment 2103 on the motion timeline 2102, the electronic device may correspondingly display, on the motion track, a track point 2104 of the target subject at the moment 2103.

S2040: The electronic device determines highlight time in the motion timeline.

In an embodiment of this application, after obtaining the motion timeline of the target subject in the image in the preset time period, the electronic device may determine, from the motion timeline, the highlight time that the user is interested in.

In some embodiments, the electronic device may determine the highlight time in the motion track based on a highlight moment in the motion timeline. In an implementation, the electronic device may automatically identify a specified moment in the motion timeline, to determine the highlight moment in the motion timeline based on the specified moment. The specified moment may include at least one of a start moment, an intermediate moment, an end moment, and a moment corresponding to a highlight track point in the motion track. Optionally, the highlight track point in the motion track may be obtained by the electronic device in the manner described in the foregoing embodiments.

In some embodiments, after the electronic device identifies the specified moment in the motion timeline, the electronic device may also display the specified moment on the motion timeline. Optionally, the electronic device may alternatively display a motion track point corresponding to the specified moment. For example, as shown in FIG. 22, the electronic device may display a plurality of specified moments on a motion timeline 2202, and the electronic device may also display, on a motion track 2201, a track position of the target subject at each specified moment.

Optionally, the electronic device may also provide a function of selecting a specified moment, so that the user may select a specified track point of interest, to generate a highlight image. When detecting a selection operation of the user on a first moment in the specified moments, the electronic device may obtain, in response to the selection operation, the first moment selected by the user as the highlight moment in the motion timeline.

In some embodiments, when the electronic device displays the motion timeline, the user may randomly select, from the motion timeline, a second moment of interest, to generate a highlight image. In this way, the electronic device can obtain, in response to the selection operation of the user on the second moment in the motion timeline, the second moment as the highlight moment in the motion timeline.

Optionally, the electronic device may extract a time period near the highlight moment, and use the time period as the highlight time in the motion track, to generate a highlight image. In other words, the highlight time may include a highlight moment and a non-highlight moment near the highlight moment. In this way, the electronic device can generate the highlight image that includes a motion process before and after the highlight moment.

Optionally, the electronic device may directly use the highlight moment as the highlight time in the motion track, to generate a highlight image. In this way, the electronic device can generate a highlight moment image corresponding to the highlight moment.

Optionally, the user may alternatively manually select a time period of interest on the motion timeline as the highlight time, to generate a highlight image.

S2050: The electronic device obtains, from the first event data, third event data corresponding to the highlight time.

In an embodiment of this application, after determining the highlight time in the motion timeline, the electronic device may generate a highlight image corresponding to the highlight time. Optionally, the electronic device may select, from the first event data, the third event data that matches the highlight time, to reconstruct a real-scene image at the highlight time.

S2060: The electronic device generates, based on the frame of image and the third event data, the highlight image corresponding to the highlight time.

After obtaining the third event data corresponding to the highlight time, the electronic device may reconstruct, based on the frame of image shot by a standard camera and the third event data, a scene image corresponding to the highlight time. The reconstructed scene image is the highlight image corresponding to the highlight time.

It may be understood that, because a dynamic process corresponding to the highlight time is recorded in the third event data, the electronic device combines one frame of static image with dynamic information included in the event data, to reconstruct, according to a fusion generation algorithm, a highlight motion picture of the target subject in the image at the highlight time. For a manner of reconstructing the real-scene image by the electronic device at any moment in the time period by using the frame of image and the event data in the time period, refer to the foregoing manner of generating a plurality of frames of images in a dynamic image. Details are not described herein again.

In some embodiments, the electronic device may also generate a cover image of a dynamic image based on the highlight image. In some embodiments, the electronic device may further determine, based on density of the third event data, a quantity of frames of highlight images to be generated. Optionally, higher density of the third event data indicates that a larger quantity of frames of highlight images may be generated.

According to the image processing method provided in this embodiment of this application, the electronic device may generate the motion track of the target subject in the image by using the frame of image and real motion information in the time period near the shooting time of the image. Then, the electronic device may generate the motion timeline of the target subject in the preset time period based on the motion track. Then, the electronic device may generate, based on event data corresponding to the highlight time of interest of the user in the motion timeline, the highlight picture corresponding to the highlight time. In this way, when the user shoots some memorable highlight pictures in the highlight image mode of the camera application, even if no highlight picture is captured in the image shot by the user, the electronic device can generate the highlight picture based on the image currently shot by the user. This improves user experience. In addition, when the user shoots a dynamic image in the dynamic image mode of the camera application, the electronic device can also generate a highlight image of the dynamic image based on the dynamic image currently shot by the user.

FIG. 23 is a schematic flowchart of another image processing method according to an embodiment of this application. The method is used to generate a highlight image based on distribution of event data in a preset time period. As shown in FIG. 23, the image processing method may include the following steps.

S2310: An electronic device obtains one frame of shot image and first event data in a preset time period near shooting time of the image.

S2320: The electronic device determines a highlight time range in the preset time period based on the density of the first event data.

It may be understood that, for an instant moment when a motion changes greatly, for example, a picture of fireworks blooming in the air, a picture of lightning bursting in the air, and a picture of a launch object (for example, a bullet in a gun) flying out of a launch apparatus, an event camera usually captures a large amount of event data. In other words, event data in such a time period is very dense. Therefore, the electronic device may determine, based on density or a sparse degree of the event data, the highlight time range that a user is interested in.

In some embodiments, the electronic device may determine, based on the density of the first event data in the preset time period, a specified time range that meets a preset density condition as the highlight time range in the preset time period. The density of event data may be understood as an amount of event data generated in unit time.

Optionally, the preset density condition includes at least one of the following: The density is maximum density in the preset time period, the density is lower than first density, the density is higher than second density, and the density is higher than the first density and lower than the second density. Values of the first density and the second density may be determined based on an actual application scenario. This is not limited in embodiments of this application.

It may be understood that when the preset density condition is that the density is the maximum density in the preset time period, the electronic device may determine, based on the maximum density, an instant moment when a motion change is greatest, so that the electronic device can generate a highlight image of a target subject with the greatest motion change, for example, a highlight moment image with a very great motion change, for example, a picture of fireworks blooming in the air, a picture of lightning bursting in the air, or a picture of a launch object (for example, a bullet in a gun) flying out of a launch apparatus.

It may be understood that when the preset density condition is that the density is lower than the first density, the electronic device may determine, based on the first density, a time range in which the event data is sparse, so that the electronic device can generate a highlight image of a target subject with a slight motion change. Similarly, when the preset density condition is that the density is higher than the second density, the electronic device may determine, based on the second density, a time range in which event data is dense, so that the electronic device can generate a highlight image of a target subject with a great motion change.

For example, as shown in FIG. 24, the electronic device may further display a density distribution diagram of the first event data on a display. Optionally, the density distribution diagram may be a scatter chart, and the scatter chart may present density of event data at different moments through a quantity of scatters and density. Optionally, the density distribution diagram may alternatively be a histogram, and the histogram may present density of event data at different moments through heights of straight bars. In this way, the user can intuitively learn a time period in which a motion change of the target subject is the greatest.

Optionally, when determining the specified time range that meets the preset density condition, the electronic device may display the specified time range in the density distribution diagram of the first event data. Optionally, the electronic device may also provide a function of selecting a specified time range, so that the user may select a time range that the user is interested in, to generate a highlight image. When detecting a selection operation of the user on a target time range in the specified time range, the electronic device may obtain the target time range as the highlight time range in the preset time period in response to the selection operation.

**In** some embodiments, when the electronic device displays the density distribution diagram of the first event data, the user may alternatively randomly select, from the density distribution diagram, a density distribution region of interest, so that the electronic device may use a time range corresponding to the density distribution region selected by the user as the highlight time range in the preset time period, to generate a highlight image.

S2330: The electronic device obtains, from the first event data, fourth event data corresponding to the highlight time range.

**In** an embodiment of this application, after determining the highlight time range in the preset time period, the electronic device may generate a highlight image corresponding to the highlight time range. Optionally, the electronic device may select, from the first event data, the fourth event data that matches the highlight time range, to reconstruct a real-scene image in the highlight time range.

S2340: The electronic device generates, based on the frame of image and the fourth event data, the highlight image corresponding to the highlight time range.

The electronic device may reconstruct, based on the frame of image shot by a standard camera and the fourth event data, a scene image corresponding to the highlight time range. The reconstructed scene image is the highlight image corresponding to the highlight time range.

It may be understood that, because a dynamic process corresponding to the highlight time is recorded in the fourth event data, the electronic device combines one frame of static image with dynamic information included in the event data, to reconstruct, according to a fusion generation algorithm, a highlight motion picture of the target subject in the image at the highlight time range. For a manner of reconstructing the real-scene image by the electronic device at any moment in the time period by using the frame of image and the event data in the time period, refer to the foregoing manner of generating a plurality of frames of images in a dynamic image. Details are not described herein again.

In some embodiments, the electronic device may also generate a cover image of a dynamic image based on the highlight image. In some embodiments, the electronic device may further determine, based on density of the fourth event data, a quantity of frames of the highlight image to be generated. Optionally, higher density of the fourth event data indicates that a larger quantity of frames of highlight images may be generated.

According to the image processing method provided in this embodiment of this application, the electronic device may determine, based on the frame of image and density distribution of the first event data in the time period near the shooting time of the image, the highlight time range that the user is interested in, so that the electronic device can generate, based on the event data corresponding to the highlight time range, the highlight picture corresponding to the highlight time range. In this way, when the user shoots some memorable highlight pictures in a highlight image mode of a camera application, even if no highlight picture is captured in the image shot by the user, the electronic device can generate the highlight picture based on the image currently shot by the user. This improves user experience. In addition, when the user shoots a dynamic image in a dynamic image mode of the camera application, the electronic device can also generate a highlight image of the dynamic image based on the dynamic image currently shot by the user.

In some embodiments, after reconstructing a plurality of frames of images by using the frame of image and the first event data in the time period near the shooting time of the image, the electronic device may further reconstruct more frames of images by shooting another frame of image and obtain first event data in a time period near shooting time of the image, and then splice and combine the plurality of frames of images obtained through a plurality of times of reconstruction, to generate a highlight image or a dynamic image with a higher frame rate.

In some embodiments, after generating the highlight image, the electronic device may implement another function based on the highlight image. For example, the electronic device may generate a preview thumbnail video based on the highlight image, so that the user can view a playing effect of the highlight image without tapping the highlight image. For another example, the electronic device may recommend a moving subject or a face based on the highlight image, so that the user can intuitively learn the moving subject and the face that are related to the highlight image.

It may be understood that different cameras have different exposure time. Therefore, definitions of the frame of image captured by the electronic device by using standard cameras are different. For example, if exposure time of a standard camera is short, when the electronic device photographs a moving object by using the standard camera, one frame of image shot is not likely to be blurred. If exposure time of a standard camera is long, when the electronic device photographs a moving object by using the standard camera, one frame of image shot is likely to be blurred. If the electronic device generates a dynamic image or a highlight image by using the blurred frame of image, an effect of obtaining the dynamic image or the highlight image is usually poor. Therefore, in an embodiment of this application, when obtaining one frame of image shot by the standard camera, the electronic device may first deblur the image, and then the electronic device generates a high-quality dynamic image or a high-quality highlight image based on the deblurred frame of image and event data in a time period near shooting time of the image. In this way, visual effects of the dynamic image and the highlight image are improved, and blurring is reduced.

In some embodiments, the event camera may also capture event data within the exposure time of the image, so that the electronic device can deblur the image based on the event data within the exposure time of the image. It may be understood that, because the event data within the exposure time of the frame of image may reflect motion information within the exposure time of the frame of image, motion compensation can be accurately performed, by using the event data within the exposure time of the frame of image, on the frame of image that is blurred due to high-speed motion of a photographed target. This implements deblurring of the frame of image.

Optionally, after obtaining the event data within the exposure time of the frame of image, the electronic device may perform motion compensation on the frame of image through multiscale end-to-end training or blur kernel estimation. A specific multiscale end-to-end training method or a blur kernel estimation method is not limited in embodiments of this application. For example, refer to FIG. 25. The electronic device may first perform multiscale feature extraction on the frame of image, then perform local motion segmentation based on the frame of image and the event data within the exposure time of the frame of image, then perform fusion with an extracted multiscale feature to obtain a fused feature, and input the fused feature to a deblurring neural network, to obtain a clear frame of image output by the network.

In some embodiments, the electronic device may alternatively directly use an existing image processing method to deblur the frame of image, for example, a deep learning-based image processing method.

In some embodiments, after deblurring the frame of image, the electronic device may alternatively perform frame interpolation on the deblurred frame of image, to obtain a plurality of clear frames of images. Then, the electronic device generates, based on the plurality of clear frames of images and the event data in the time period near the shooting time of the frame of image, a dynamic image or a highlight image including more image frames. This improves a frame rate of the dynamic image or the highlight image, and makes it possible to implement a slow-motion image or a super-slow-motion image.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. During actual implementation, there may be another division manner.

When each functional module corresponding to each function may be obtained through division, this application provides a possible composition diagram of the electronic device in the foregoing embodiments. The electronic device may include a data obtaining unit, a track generation unit, a track determining unit, a first screening unit, and a first processing unit.

The data obtaining unit, the track generation unit, the track determining unit, the first screening unit, and the first processing unit may be configured to support the electronic device in performing the foregoing corresponding steps, and/or another process of the technology described in this specification.

The electronic device provided in this embodiment of this application is configured to perform the foregoing image processing method, and therefore can achieve a same effect as the foregoing implementation method.

When an integrated unit is used, the electronic device may include a processing module, a storage module, and a communication module. The processing module may be configured to control and manage an action of the electronic device, for example, may be configured to support the electronic device to perform the steps performed by the data obtaining unit, the track generation unit, the track determining unit, the first screening unit, and the first processing unit. The storage module may be configured to support the electronic device to store program code, data, and the like. The communication module may be configured to support communication between the electronic device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor, and the storage module is a memory, for a structure of the electronic device in this embodiment, refer to the structure of the electronic device 100 shown in FIG. 1A.

It should be noted that all related content of the steps in the foregoing method embodiments may be cited in function description of corresponding functional modules. Details are not described herein again.

Some other embodiments of this application further provide an image processing apparatus. The apparatus may be used in the foregoing electronic device. The apparatus is configured to perform functions or steps performed by the electronic device in the foregoing method embodiments.

An embodiment of this application further provides a chip system. The chip system includes at least one processor and at least one interface circuit. The processor and the interface circuit may be interconnected through a line. The interface circuit may read instructions stored in the memory, and send the instructions to the processor. When the instructions are executed by the processor, the image processing apparatus and the electronic device may perform functions or steps in the foregoing method embodiments.

An embodiment of this application further provides a computer storage medium. The computer storage medium includes computer instructions. When the computer instructions are run on the foregoing image processing apparatus and the foregoing electronic device, the image processing apparatus and the electronic device are enabled to perform functions or steps in the foregoing method embodiments.

An embodiment of this application further provides a computer program product. When the computer program product runs on a computer, the computer is enabled to perform the functions or steps performed by the electronic device in the foregoing method embodiments.

The image processing apparatus, the electronic device, the computer storage medium, the computer program product, or the chip provided in this embodiment is configured to perform the corresponding method provided above. Therefore, for beneficial effects that can be achieved by the image processing apparatus, the electronic device, the computer storage medium, the computer program product, or the chip, refer to the beneficial effects of the corresponding method provided above. Details are not described herein again.

Based on the foregoing descriptions of the implementations, a person skilled in the art may clearly understand that for the purpose of convenient and brief descriptions, division into the foregoing functional modules is merely used as an example for descriptions. During actual application, the foregoing functions may be allocated to different functional modules for implementation according to a requirement. In other words, an inner structure of an apparatus is divided into different functional modules to implement all or a part of the functions described above.

In several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium and includes several instructions for indicating a device (which may be a single-chip microcomputer, a chip, or the like) or a processor (processor) to perform all or some of the steps of the methods described in embodiments of this application. The foregoing storage medium includes any medium that can store program code such as a USB flash drive, a removable hard disk drive, a read-only memory (read-only memory, ROM), a random-access memory (random-access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An image processing method, applied to an electronic device, wherein the method comprises:
obtaining one frame of shot image and first event data in a preset time period near shooting time of the frame of image;
generating a motion track of a target subject in the frame of image in the preset time period based on the frame of image and the first event data;
determining a highlight track in the motion track;
obtaining, from the first event data, second event data corresponding to the highlight track; and
generating, based on the frame of image and the second event data, a highlight image corresponding to the highlight track.

2. The method according to claim 1, wherein the determining a highlight track in the motion track comprises:
determining the highlight track in the motion track based on a highlight track point in the motion track.

3. The method according to claim 2, wherein the method further comprises:
identifying a specified track point in the motion track, wherein the specified track point comprises at least one of a highest track point, a lowest track point, an intermediate track point, a start track point, an end track point, and a track mutation point; and
determining the highlight track point in the motion track based on the specified track point.

4. The method according to claim 3, wherein the determining the highlight track point in the motion track based on the specified track point comprises:
displaying the specified track point; and
in response to a selection operation for a first track point in the specified track point, obtaining the first track point as the highlight track point in the motion track.

5. The method according to claim 2, wherein the method further comprises:
displaying the motion track; and
in response to a selection operation for a second track point in the motion track, obtaining the second track point as the highlight track point in the motion track.

6. The method according to any one of claims 2 to 5, wherein the determining the highlight track in the motion track based on a highlight track point in the motion track comprises:
obtaining a track segment corresponding to the highlight track point as the highlight track in the motion track; or
obtaining the highlight track point as the highlight track in the motion track.

7. The method according to claim 1, wherein the method further comprises:
generating a motion timeline of the target subject in the preset time period based on the motion track;
determining highlight time in the motion timeline;
obtaining, from the first event data, third event data corresponding to the highlight time; and
generating, based on the frame of image and the third event data, a highlight image corresponding to the highlight time.

8. The method according to claim 7, wherein the determining highlight time in the motion timeline comprises:
determining the highlight time in the motion track based on a highlight moment in the motion timeline.

9. The method according to claim 8, wherein the method further comprises:
identifying a specified moment in the motion timeline, wherein the specified moment comprises at least one of a start moment, an intermediate moment, an end moment, and a moment corresponding to the highlight track point in the motion track; and
determining the highlight moment in the motion timeline based on the specified moment.

10. The method according to claim 9, wherein the determining the highlight moment in the motion timeline based on the specified moment comprises:
displaying the specified moment; and
in response to a selection operation for a first moment in the specified moment, obtaining the first moment as the highlight moment in the motion timeline.

11. The method according to claim 8, wherein the method further comprises:
displaying the motion timeline; and
in response to a selection operation for a second moment in the motion timeline, obtaining the second moment as the highlight moment in the motion timeline.

12. The method according to any one of claims 8 to 11, wherein the determining the highlight time in the motion track based on a highlight moment in the motion timeline comprises:
obtaining a time period corresponding to the highlight moment as the highlight time in the motion track; or
obtaining the highlight moment as the highlight time in the motion track.

13. The method according to claim 1, wherein the method further comprises:
determining a highlight time range in the preset time period based on density of the first event data;
obtaining, from the first event data, fourth event data corresponding to the highlight time range; and
generating, based on the frame of image and the fourth event data, a highlight image corresponding to the highlight time range.

14. The method according to claim 13, wherein the determining a highlight time range in the preset time period based on density of the first event data comprises:
determining, based on the density of the first event data, a specified time range that meets a preset density condition as the highlight time range in the preset time period, wherein the preset density condition comprises at least one of the following: the density is maximum density in the preset time period, the density is lower than first density, the density is higher than second density, and the density is higher than the first density and lower than the second density.

15. The method according to claim 14, wherein the method further comprises:
displaying the specified time range; and
in response to a selection operation for a target time range in the specified time range, obtaining the target time range as the highlight time range in the preset time period.

16. The method according to claim 13, wherein the determining a highlight time range in the preset time period based on density of the first event data comprises:
displaying a density distribution diagram of the first event data based on the density of the first event data; and
in response to a selection operation for target density distribution in the density distribution diagram, obtaining a time range corresponding to the target density distribution as the highlight time range in the preset time period.

17. The method according to any one of claims 13 to 16, wherein the method further comprises:
determining a frame rate of the highlight image based on density of the fourth event data.

18. The method according to any one of claims 1 to 17, wherein the method further comprises:
obtaining, from the first event data, event data corresponding to each of a plurality of time intervals, wherein the plurality of time intervals are obtained by dividing the preset time period;
generating, based on the frame of image and the event data corresponding to each time interval, an image corresponding to each time interval, to obtain a plurality of frames of images; and
generating a dynamic image sequence based on the plurality of frames of images, wherein the dynamic image sequence is used to present a motion process of the target subject in the frame of image in the preset time period.

19. The method according to claim 18, wherein the method further comprises:
generating a cover image of the dynamic image sequence based on the highlight image.

20. An electronic device, wherein the electronic device comprises a memory and one or more processors, the memory is coupled to the processor, the memory is configured to store computer program code, the computer program code comprises computer instructions, and when the processor executes the computer instructions, the electronic device performs the method according to any one of claims 1 to 19.

21. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 19.

22. A computer storage medium, comprising computer instructions, wherein when the computer instructions are run on an electronic device, the electronic device is enabled to perform the method according to any one of claims 1 to 19.

23. A computer program product, wherein when the computer program product runs on a computer, the computer is enabled to perform the method according to any one of claims 1 to 19.
